# EUROPEAN PATENT SPECIFICATION

(11) **EP 3 554 108 B1**
(45) Date of publication and mention of the grant of the patent: **26.08.2020**
(21) Application number: 18166731.2
(22) Date of filing: 11.04.2018
(51) Int. Cl.: H04W 4/90, H04W 4/02, H04L 29/08, H04W 8/26, H04M 3/42, H04M 3/51, H04W 12/12, H04W 88/08, H04L 29/06, H04W 12/00, H04W 64/00

(54) **A COMMUNICATION SYSTEM AND METHOD FOR LOCATION IDENTIFICATION**
KOMMUNIKATIONSSYSTEM UND VERFAHREN ZUR ORTSBESTIMMUNG
SYSTÈME DE COMMUNICATION ET PROCÉDÉ D'IDENTIFICATION D'EMPLACEMENT

(43) Date of publication of application: 16.10.2019
(73) Proprietor: Deutsche Telekom AG, 53113 Bonn (DE)
(72) Inventor: REITH, Lothar, 60596 Frankfurt am Main (DE); PAUL, Manuel, 12683 Berlin (DE)
(74) Representative: Vossius & Partner Patentanwälte Rechtsanwälte mbB

(56) References cited:
- EP-A2- 2 375 690
- WO-A1-2017/211812
- US-A1- 2017 311 304
- BBF WIKI: "SD-420 5G Fixed Mobile Convergence Study", 3GPP DRAFT; SD-420 5G FIXED MOBILE CONVERGENCE STUDY (EXTERNAL)-V1-2018_01_12, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , no. ; 20181201 18 January 2018 (2018-01-18), XP051390182, Retrieved from the Internet: URL:http://www.3gpp.org/ftp/tsg%5Fsa/WG2%5 FArch/TSGS2%5F125%5FGothenburg/Docs/ [retrieved on 2018-01-18]

## Description

### TECHNICAL FIELD

In general, the present invention relates to the field of communication network. More specifically, the present invention relates to a communication system and a corresponding method for determining a location identification of a communication cell being a fixed or mobile cell.

### BACKGROUND

User location identification and station location identification (as it applies to a mobile station attached to a mobile network or to a fixed station attached to a fixed network) are subsequently summarized under the term "location identification", and the term location ID refers to an identifier that is used for location identification.

Location identification is important and should be trusted as it is used in regulated use cases such as emergency calls in fixed and mobile networks and lawful interception in fixed and mobile networks to identify the location of a user or of an equipment referred to as station.

The term "trusted" means that a user cannot change or tamper the location ID even if the user manipulates the station, because a trusted location ID is not added inside the customer domain, but added inside the operator domain itself being trusted and managed to be tamper save. Therefore, such network-based location identification using a trusted location ID can be used for the use cases mentioned above (e.g., emergency call or lawful interception) as well as for the operation of the network overall.

Location identification in mobile networks is performed using a so-called Cell-ID, abbreviated as CI, which is an identifier that identifies one cell within a location area. In situations where the respective instance of a location area and the respective mobile network to which the location area belongs are known from a current context information, it is sufficient to signal just the Cell-ID (CI). In situations where the location ID is required in a worldwide unique format, a so-called Cell-Global-ID may be used (abbreviated as CGI). A CGI identifies the same cell as the CI included in the CGI that is created by prepending to the CI the local MCC (Mobile Country Code), MNC (Mobile Network Code) and LAC (Location Area Code).

A communication cell is a fixed cell or a mobile cell and a cell is the spatial area where electromagnetic waves propagate to and from a port or antenna sending electromagnetic waves or receiving electromagnetic waves in the physical layer of the OSI/ISO Reference model and where a station may attach based on receiving a sufficiently strong receive signal. It should be noted that this definition of communication cell and this definition of cell is a fixed mobile converged definition, as it equally applies to both mobile and fixed access, also referred to as wireless access and wireline access, or referred to as radio access and copper or fiber based access

Location identification in fixed networks is often performed in operator proprietary ways. As part of a standardization effort in Germany for NGA (Next Generation Access), on the other hand, a so-called Line-ID has been specified and is used by network deployments supporting the NGA framework.

EP 2 375 690 A2 discloses a system that associates physical locations with network-linked devices in a network and employs a variety of techniques for establishing device location as well as a method of determining a physical location of a client in a network, wherein the method includes: determining an identifier of a connection point through which the client communicates with the network and determining a physical location of the client based on the determined identifier of the connection point, including accessing a stored association between the connection point identifier and the physical location.

However, the lack of a unified trusted location identification complicates fixed mobile convergence, which makes it impossible to use one interface for both fixed and mobile access, in particular the N1, N2 and N3 interfaces currently in specification by 3GPP for accessing a 5G Core Network, even if both the fixed and the mobile accesses are managed by the same operator as trusted network resources.

In light of the above, there is a need for an improved communication system and method, allowing determining a trusted location identification within a communication cell in a tamper-proof way.

### SUMMARY OF THE INVENTION

It is an object of the disclosure to provide an improved communication system and method, allowing determining a trusted location identification within a communication cell in a tamper-proof way.

The foregoing and other objects are achieved by the subject matter of the independent claims. Further implementation forms are apparent from the dependent claims, the description and the figures.

Generally, the disclosure relates to a communication system and a corresponding method, allowing determining a trusted location identification associated with a communication cell. More specifically, embodiments of the present disclosure can determine a location identification of a mobile station attached in a mobile cell comprised in a mobile network and a further location identification of the fixed station in a fixed cell comprised in a fixed network wherein a mobile location ID assigned to the mobile cell and a fixed location ID assigned to the fixed cell are represented as location ID based on a common location ID namespace whereby creating a fixed mobile converged location identifier, also referred to as location ID, wherein a location ID that identifies a location in a mobile network is a mobile location ID and a location ID that identifies a location in a fixed network is a fixed location ID.

Embodiments of the disclosure can use a unified N2 interface for both fixed and mobile access to a 5G core network, facilitating the use of a common core network for providing services via various (3GPP and non-3GPP) access network technologies and infrastructure (e.g. RAN, WLAN, wireline broadband access). In particular, this includes the functionality and procedures for user device registration and connection management, but also policy management.

For network operators, such fixed mobile convergence (FMC) offers significant technical and operational benefits with an integrated management of wireline, wireless and mobile access networks, e.g. an easy handover between mobile and fixed (e.g. Wifi via fixed), and efficient provision of services. Furthermore, users can enjoy a better service experience, since they can be more seamlessly and/or simultaneously connected via different access networks.

The embodiments of the disclosure also provide another key advantage of supporting the large installed base operating within state-of-the-art NGA frameworks in existing fixed broadband networks, protecting investments for equipment as well as network management and operational support systems.

More specifically, according to a first aspect the disclosure relates to a communication system which comprises a plurality of access network entities and a core network entity, in particular an AMF (access and mobility management) entity, wherein the plurality of access network entities comprises: at least a mobile access network entity, in particular an eNodeB or a gNodeB, forming a mobile cell comprising a coverage area for connecting a mobile station, wherein a mobile location identification, ID, is assigned to the coverage area and thus implicitly also to the mobile cell based on the one to one relation between the coverage area and the mobile cell; and a fixed access network entity forming a fixed cell comprising a further coverage area for connecting a fixed station, wherein a fixed location identification, ID, is assigned to the further coverage area and thus implicitly to the fixed cell based on the one to one relation between the coverage area and the fixed cell; and wherein the core network entity is configured to determine a location identification of the mobile station based on the mobile location ID and a further location identification ID of the fixed station based on the fixed location ID, wherein the mobile location ID and the fixed location ID are both a location ID that is represented based on a common location ID namespace. The communication system is characterized in that: the core network entity is configured to receive via an N2 interface the mobile location ID together with a mobile station ID assigned to the mobile station in a common location ID namespace format upon a connection request from the mobile station, and the core network entity is configured to receive via the further N2 interface the fixed location ID together with a fixed station ID assigned to the fixed station in the common location ID namespace format upon a connection request from the fixed station.

An improved communication system is hence provided, allowing determining trusted location identification of the mobile station and trusted location identification of the fixed station in a tamper-proof way, where the trust is derived from a trusted association of a location ID to a coverage area comprised in a fixed or mobile cell and from a trusted assignment of that location ID to a port in a access network entity, and where the trust is further derived from the fact that the previously assigned location ID is added during attachment by the access network entity, which cannot be manipulated by a malicious user, and is transported during attachment to a core network entity where it is stored in a context information of the access session created with the attachment, regardless of whether it is a mobile attachment or fixed attachment occurring when powering up the fixed station whereby bringing up layer1 and layer2.

In a further possible implementation form of the first aspect, the mobile location ID is transmitted via an N2 interface between the mobile access network entity and the core network entity; and the fixed location ID is transmitted via a further N2 interface between the fixed access network entity and the core network entity, wherein the N2 interface and the further N2 interface are defined by 3GPP as part of the 5G system architecture.

Thus, an improved interface for both fixed and mobile access connecting to the 5G network is provided.

In a further possible implementation form of the first aspect, the mobile cell comprises a spatial area where electromagnetic waves propagate between the mobile station and an antenna of the mobile access network entity and the coverage area of the mobile cell comprises a geographical area where the mobile station receives a signal whose signal strength is above a threshold, wherein the signal is transmitted by the antenna of the mobile access network entity; and the fixed cell comprises a spatial area where electromagnetic waves propagate on a cable or fiber between the fixed station and the fixed access network entity and the further coverage area of the fixed cell comprises a further geographical area where the electromagnetic waves leave the cable or fiber of the provider, and where the fixed station at the user site receives a signal whose signal strength is above a threshold.

The respective location ID can identify either the location of the respective three-dimensional cell or preferably the location of the respective two-dimensional coverage area being the area which terminates the respective three-dimensional cell. In case of mobile an abstracted two dimensional ground level (surface area of earth) terminates the cell. In case of fixed, an abstracted two-dimensional surface area of the cable or fibre terminates the cell, where the electromagnetic waves propagate into the domain of the user through this two-dimensional surface-area of very small size - measured in square millimeters. It should be noted that the location-ID in fixed cell usually does not have the accuracy of millimeter, rather usually an address of a customer premise is considered to be granular enough for the purpose, which include regulated location identification for emergency call and for lawful interception, also considering that the user may move the end of the cable within his premises.

In a further possible implementation form of the first aspect, the communication system further uses a common location ID namespace comprising a set of location IDs, where this set of location IDs comprises a minimum of one mobile location ID and a minimum of one fixed location ID.

In a further possible implementation form of the first aspect, the communication system comprises an access network entity and the access network entity is configured via a trusted assignment to assign a location ID which has previously been associated with a coverage area to a port comprised in the access network entity. in a trusted manner - such that the assignment of the location ID to the portcannot be tampered.

In a further possible implementation form of the first aspect, the communication system further comprises an access network entity and the network entity is configured to add the previously assigned location ID of a cell or coverage area in a trusted manner during the attachment procedure of a station that attaches through the port to which the location ID is assigned, and therefore it can be trusted that the attachment occurs from the location of the coverage area identified by the location ID.

In a further possible implementation form of the first aspect, the network entity comprises the mobile access network entity and/or the fixed access network entity.

In a further possible implementation form of the first aspect, the network entity is configured to map a mobile country code as defined by 3GPP to a fixed country code as defined in ISO 3166, and/or to map a fixed country code as defined in ISO 3166 to a mobile country code as defined by 3GPP, and/or to map a mobile carrier code as defined by 3GPP to a fixed network code as defined by ITU in M.1400, and/or to map fixed network code as defined by ITU in M.1400 to a mobile network code as defined by 3GPP for encoding the mobile location ID and the fixed location ID in the common location ID namespace.

In a further possible implementation form of the first aspect, the common location ID namespace comprising a domain name, in particular 3GPP.org, the network entity is configured to assign the mobile location ID from the common location ID namespace by combining a Cell-ID with the domain name and to assign the fixed location ID from the common location ID namespace by combining a further Cell-ID with the domain name, wherein the further Cell-ID is not used for assigning a mobile location ID.

In a further possible implementation form of the first aspect, the common location ID namespace comprising a domain name, in particular 3GPP.org, the network entity is configured to assign the mobile location ID from the common location ID namespace by combining a Cell-Global-ID with the domain name and to assign the fixed location ID from the common location ID namespace by combining a further Cell-Global-ID with the domain name, wherein the further Cell-Global-ID is not used for assigning the mobile location ID.

In a further possible implementation form of the first aspect, the common location ID namespace comprising a domain name, in particular 3GPP.org, the network entity is configured to assign the mobile location ID from the common location ID namespace by combining an Extended-Cell-ID with the domain name and to assign the fixed location ID from the common location ID namespace by combining a further Extended-Cell-ID with the domain name, the further Extended-Cell-ID being not used for assigning the mobile location ID, wherein the respective Extended-Cell-ID is created by extending an existing namespace for 5G network.

In a further possible implementation form of the first aspect, the core network entity is configured to determine the location identification of the mobile station based on the mobile location ID and the mobile station ID and to determine the further location identification of the fixed station based on the fixed location ID and the fixed station ID.

In a further possible implementation form of the first aspect, the core network entity is configured to determine a type of access network, in particular a mobile access network or a fixed access network, on the basis of the respective location ID upon a connection request from one of the plurality of access network entities, and the core network entity is configured to determine an attachment procedure corresponding to the type of access network.

In a further possible implementation form of the first aspect, the core network entity is configured to select a SMF (session management function) entity for session management on the basis of the respective location ID presented by the access network entity.

In a further possible implementation form of the first aspect, the selected SMF entity is configured to determine a session management procedure on the basis of the respective location ID presented by the access network entity.

In a further possible implementation form of the first aspect, the communication system further comprises a set of core network slice instances, each of the set of core network slice instances comprises a plurality with a minimum of one AMF entity which may be shared among slice instances; and where the AMF uses the respective location ID during a network slice selection procedure.

According to a second aspect, the disclosure relates to a method for operating a communication system, the communication system comprising a plurality of access network entities and a core network entity, in particular an AMF entity, the plurality of access network entities comprising: a mobile access network entity, in particular an eNodeB or a gNodeB, forming a mobile cell for connecting a mobile station, wherein a mobile location ID is assigned to the a coverage area comprised in a mobile cell ; and a fixed access network entity forming a fixed cell for connecting a fixed station, wherein a fixed location ID is assigned to a further coverage area comprised in the fixed cell .

The method comprises the following steps: determining a location identification of the mobile station based on the mobile location ID at the core network entity; and determining a further location identification of the fixed station based on the fixed location ID at the core network entity, wherein the mobile location ID and the fixed location ID are represented based on a common location ID namespace. The method is characterized in that: the core network entity receives via an N2 interface the mobile location ID together with a mobile station ID assigned to the mobile station in a common location ID namespace format upon a connection request from the mobile station, and the core network entity receives via the further N2 interface the fixed location ID together with a fixed station ID assigned to the fixed station in the common location ID namespace format upon a connection request from the fixed station.

The method can be implemented using the communication system according to the first aspect.

Thus, an improved method is provided, allowing determining trusted location identification of the mobile station and trusted location identification of the fixed station in a tamper-proof way.

### BRIEF DESCRIPTION OF THE DRAWINGS

Further embodiments of the invention will be described with respect to the following figures, wherein:
Fig. 1 shows a schematic diagram illustrating a system architecture of a 5G communication network;
Fig. 2 shows a block diagram of an exemplary communication system comprising a plurality of access network entities and a core network entity according to an embodiment;
Fig. 3 shows a block diagram of an exemplary communication system comprising a plurality of access network entities and a core network entity according to an embodiment;
Fig. 4 shows a block diagram of an exemplary communication system comprising a fixed/mobile converged access network entity and a core network entity according to an embodiment;
Fig. 5 shows a block diagram of an exemplary communication system comprising a first slice instance, a second slice instance and a core network entity according to an embodiment;
Fig. 6 shows a block diagram of an exemplary communication system comprising a first SMF entity, a second SMF entity and a core network entity according to an embodiment;
Fig. 7 shows a block diagram of an exemplary communication system comprising a first SMF entity, a second SMF entity, a first UPF, a second UPF and a core network entity according to an embodiment;
Fig. 8 shows a block diagram of an exemplary communication system comprising a first slice instance, a second slice instance, a first SMF entity, a second SMF entity, a first UPF, a second UPF and a core network entity according to an embodiment;
Fig. 9 shows a schematic diagram illustrating an exemplary method for operating a communication system according to an embodiment; and
Fig. 10 shows a schematic diagram illustrating a further exemplary method for operating a communication system according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

Embodiments of the present disclosure can use a common location ID namespace for trusted location identification, wherein the trusted location identification is common across the fixed and mobile network domains, and wherein the trusted location identification is a fixed mobile converged (FMC) trusted location identification for an FMC unified cell, which is either a mobile cell or a fixed cell. It is to be noted that in Passive Optical Network (PON) systems, the trusted location ID identifies one PON-Tree, and an additional authentication may be required to identify a particular leaf of the tree, such as a hardware authentication of the Optical Network Termination (ONT) device attached to a leaf of the PON-Tree.

The convergence is based on a defining a cell as a converged cell, where the cell is defined as the spatial area where electromagnetic waves propagate between a port of a layer 1 access network entity such as a DSLAM, eNodeB or gNodeB, and a user equipment referred to as station, where a location ID is assigned to a coverage area comprised in the cell, and where a location ID is assigned to the coverage area and is configured at the port comprised in the layer 1 access network entity that originates or terminates the electromagnetic waves defining the spatial are referred to as cell, and by the layer 1 access network entity at station attachment time transporting to a higher layer access network entity - such as an AMF in 5G system - the location ID configured at cell installation time at the port whereby the location ID is stored in a session attachment context information of the higher layer access network entity and can be used for location identification when required, e.g. for lawful intercept, emergency call etc.

Embodiments of the disclosure can facilitate the use of a common core network under 5G system architecture for providing services via various (3GPP and non-3GPP) access network technologies and infrastructure, e.g. RAN, WLAN, or wireline broadband access. Thus, the system architecture of a 5G communication network will be first introduced in details below.

First of all, network entities such as network access entities and functions of such a network access entity or radio access network (RAN) entities are described in the following. The network access entity enables access and mobility management in the communication network. Via the network access entity, communication terminals with their identity (UE ID) can register in the communication network and receive the permission to set up a communication connection. For example, in the 5G communication network, the network access entity may be an AMF (Access and Mobility Management Function) representing the access and mobility management function. This manages the access and mobility control. The AMF may also include network slice selection functionality. For fixed wireless access, mobility management is not needed. The network access entity may be, for example, an MME (mobility management entity) in the 4G communication network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

The radio access network (RAN) is part of a mobile telecommunication system. It implements a radio access technology (RAT). Conceptually, it resides between a device such as a mobile phone, a computer, or any remotely controlled machine and provides connection with its core network (CN). Depending on the standard, mobile phones and other wireless connected devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN referred to as 5G NR (New Radio). The RAN entity can for example include a base station, e.g. a NodeB or an eNodeB or a gNodeB in a 5G system.

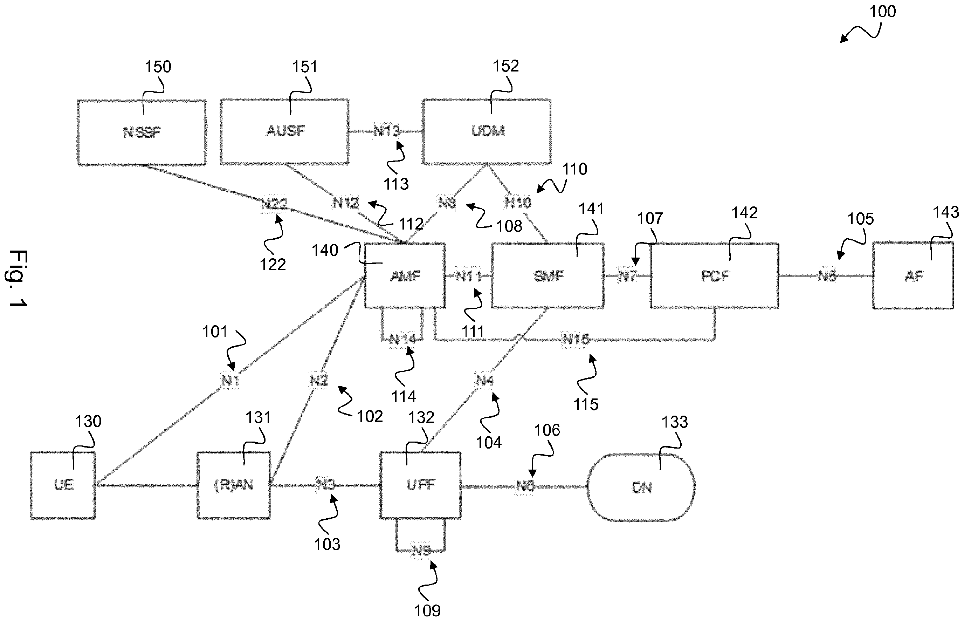

Fig. 1 shows a schematic diagram illustrating a system architecture of a 5G communication network 100. The 5G system architecture 100 comprises the network functions illustrated in the individual blocks of Figure 1.

The UE (User Equipment) block 130 represents the user equipment or client terminal or mobile communication device or fixed communication device which can be operated by the subscriber to initiate communication in the 5G network, i.e. starting a communication (mobile originating, MO) or accepting (mobile terminating, MT). The UE can also initiate communication without user interaction, e.g. it can be a machine terminal, e.g. for a car or a robot or other device.

The block (R)AN ((radio) access network) 131 represents the (radio) access network by which the UE 130 obtains access to the 5G communication network. The interface between UE 130 and (R)AN is either an air interface when the access network 131 is a wireless network or wired when the access network is a wired network.

The Access and Mobility Management Function (AMF) block 140 represents the access and mobility management function. It manages the access and mobility functions of the UE. The AMF may also include network slice selection functionality. For fixed wireless access, mobility management is not needed.

The Session Management Function (SMF) block 141 represents the session management function. It sets up sessions and manages them according to the network policy.

The User Plane Function (UPF) block 132 represents the User Plane function. UPFs can be applied in various configurations and locations, according to the service type.

The Policy Control Function (PCF) block 142 represents the policy control function. It provides a policy framework that includes network slicing, roaming, and mobility management. This corresponds to the functionality of a PCRF in 4G systems.

The block UDM (Unified Data Management) 152 provides a shared data management. This saves subscriber data and profiles. This is equivalent to the functionality of an HSS in 4G systems, but is used for both mobile and wired access in the NG Core network.

The block DN (Data Network) 133 provides the data network over which data is transmitted, e.g. from one UE to another UE.

The block AUSF (Authentication Server Function) 151 provides authentication functionality with which the subscriber or the UE can log on to the network.

The AF (Application Function) block 151 provides application functions that enable certain services to be executed.

The NSSF block (Network Slice Selection Function) 150 provides functions to select a particular network slice instance from a plurality of network slice instances.

The 5G system architecture shown in Figure 1 represents the structure of the NG (Next Generation) network, which consists of network functions (NFs) and reference points connecting the NFs. The UE 130 is connected to either a Radio Access Network (RAN) 131 or an Access Network (AN) 131. In addition, the UE 130 is connected to the Access and Mobility Function (AMF) 140. The RAN 131 represents a base station using new RAT and advanced LTE technologies, while the AN 131 is a general base station with non-3GPP access, e.g. a WiFi Access Point. The Next Generation core network 100 consists of various network functions (NFs). In Figure 1, there are seven Next Generation core NFs, namely (1) AMF 140, (2) Session Management Function (SMF) 141, (3) Policy Control Function (PCF) 142, (4) Application Function (AF) 143, (5) Authentication Server Function (AUSF) 151, (6) User Plane Function (UPF) 132, and (7) User Data Management (UDM) 152.

The network function (NF) represents the processing function inherited from 3GPP in NextGen or NG. It has both functional behavior and serves as an interface. An NF can either be implemented as a network element (or network entity) on dedicated hardware, as a software instance on dedicated hardware, or instantiated as a virtualized function on a suitable platform, e.g. B. a cloud infrastructure.

The AMF 140 provides UE-based authentication, authorization, mobility management, etc. A UE 130 is basically connected to a single AMF 140 because the AMF 140 is independent of the access technology. That means, also a UE 130 with multiple access technologies is only connected to a single AMF 140.

The SMF 141 is responsible for session management and assigns IP addresses to the UEs 130. In addition, the SMF 141 selects the UPF 132 and controls the UPF 132 for data transfer. If a UE 130 has multiple sessions, different SMFs 141 may be associated with each session to individually control them and possibly provide multiple functionalities per session.

The AF 143 provides information about the packet flow and provides it to the PCF 142, which is responsible for policy control to ensure Quality of Service (QoS). Based on this information, PCF 142 will determine the Mobility and Session Management policies for the AMF 140 and SMF 141 to function properly.

The AUSF 151 stores data for authentication of the UE 130 while the UDM 152 stores subscription data of the UE 130. The data network DN 133, which is not part of the NG core network 100, provides Internet access and operator services.

The architectural reference point view can be used to represent detailed message flows in Next Generation (NG) standardization. The reference point Next Generation NG1 101 is defined as transmission signaling between the UE 130 and the AMF 140. The reference points for the connection between the AN 131 and the AMF 140 and between the AN 131 and the UPF 132 are referred to as NG 2 102 and NG3 103. There is no reference point between the AN 131 and the SMF 141, but there is a reference point, NG11 111, between the AMF 140 and the SMF 141. This means that the SMF 141 is controlled by the AMF 140. NG4 104 is used by the SMF 141 and the UPF 132 to allow the UPF 132 to be set with the generated control signal from the SMF 141, and the UPF 132 can report its status to the SMF 141. NG9 109 is the reference point for the connection between different UPFs 132 and NG14 114 is the reference point between different AMFs 140. NG15 115 and NG7 107 are defined in order for PCF 142 to apply its policies to AMF 140 and SMF 141, respectively. NG12 112 is required for the AMF 140 to perform authentication of the UE 130. NG8 108 and NG10 110 are defined because the subscription data of UE 130 is needed by AMF 140 and SMF 141.

The Next Generation Network 100 aims to realize a separation of user and control or control level. The user level transmits the user traffic, while the control level transmits the signaling on the network. In Figure 1, the UPF 132 is in the user plane and all other network functions, i.e. AMF 140, SMF 141, PCF 142, AF 143, AUS 151 and UDM 152 are in the control plane. Separation of user and control planes guarantees independent scaling of resources at each network level. The separation also allows the provision of UPFs 132 in a distributed manner separate from the functions of the control plane.

The NG Architecture 100 consists of modularized functions. For example, AMF 140 and SMF 141 are independent functions in the control plane. Separate AMF 140 and SMF 141 allow independent development and scaling. Other control plane functions such as PCF 142 and AUSF 151 may be separated as shown in Figure 1. The modularized functional design illustrated in Figure 1 also enables the Next Generation Network 100 to flexibly support various services.

Each network function interacts directly with another NF. At the control level, a series of interactions between two NFs are defined as a service, so that they can be reused. This service allows support for modularity. The user level supports interactions such as forwarding operations between different UPFs 132.

More details for providing an integrated management of wireline, wireless and mobile access networks to access the 5G core network and efficient provision of connection services will be described further below in the following embodiments.

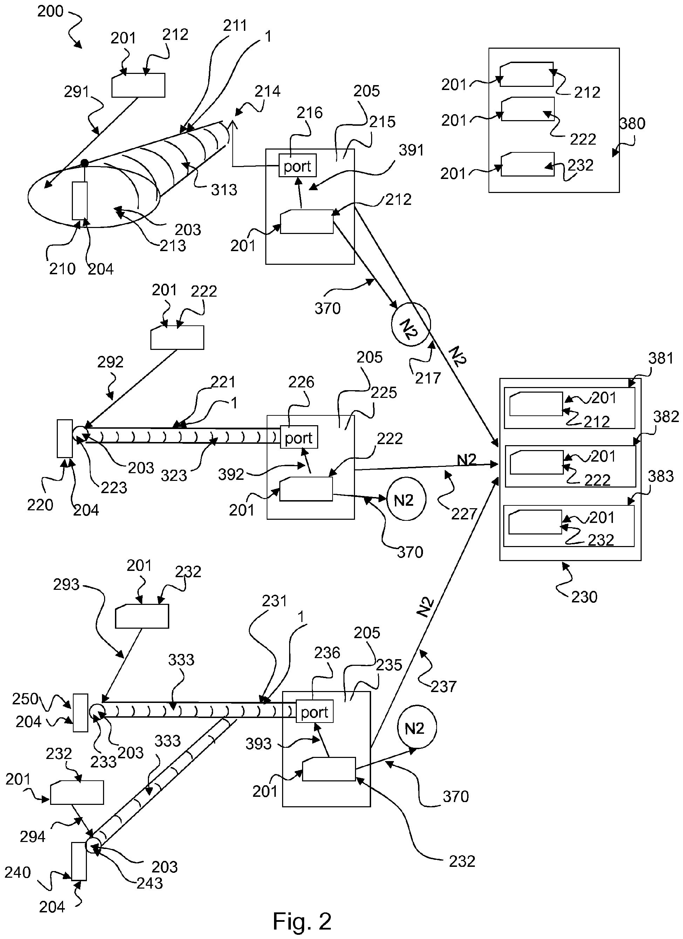

Figure 2 shows a schematic diagram of a communication system 200 according to an embodiment, wherein the communication system 200 comprises a plurality of access network entities 205 and a core network entity 230, wherein the plurality of access network entities 205 comprises at least a mobile access network entity 215, a first fixed access network entity 225 and a second fixed access network entity 235.

In an embodiment, the mobile access network entity 215, in particular an eNodeB or a gNodeB, forms a mobile cell 211 for connecting a mobile station 210, wherein the mobile cell 211 comprises a coverage area 213. More specifically, the mobile cell 211 comprises a spatial area where electromagnetic waves 313 propagate between the mobile station 210 and an antenna 214 of connected to a port 216 on the mobile access network entity 215, and the coverage area 213 of the mobile cell 211 comprises a geographical area where the mobile station 210 receives a signal whose signal strength is sufficiently strong above a threshold, wherein the signal is transmitted by the antenna 214 of the mobile access network entity 215.

Furthermore, a location ID 201 instantiated as mobile location ID 212 has previously been associated to the coverage area 213 in a first trusted association 291 preceding a first trusted antenna installation time assignment 391, where the location ID 201 instantiated as mobile location ID 212 has been assigned to the port 216 that connects to the mobile cell 211 via antenna 214 , and the mobile location ID 212 is transmitted at attachment time via an N2 interface 217 from the mobile access network entity 215 to the core network entity 230, where it is stored in an attachment session context information 381 after trusted location ID over N2 Interface transport 370.

In an embodiment, the first fixed access network entity 225, e.g. DSLAM, forms a first fixed cell 221 for connecting a first fixed station 220, wherein the first fixed cell 221 comprises a first further coverage area 223. More specifically, the first fixed cell 221 comprises a spatial area where electromagnetic waves 323 propagate on a cable or fiber connected to port 226 on the first fixed access network entity 225 between the fixed station 220 and the first fixed access network entity 225 and the first further coverage area 223 of the first fixed cell 221 comprises a further geographical area where the fixed station 220 receives a signal whose signal strength is sufficiently strong above a threshold, wherein the signal is transmitted by the cable or fiber.

Furthermore, a location identifier 201 instantiated as first fixed location ID 222 has previously been associated to the first further coverage area 223 in a second trusted association 292 preceding a second trusted fixed line installation time assignment 392, where a location ID 201 instantiated as first fixed location ID 222 has been assigned to the port 226 that connects the first fixed cell 221, and the first fixed location ID 222 is transmitted at attachment time via an N2 interface 227 from the first fixed access network entity 225 to the core network entity 230 , where it is stored in an attachment session context information 382 after trusted location ID over N2 Interface transport 370.

Similarly, the second fixed access network entity 235, e.g. an OLT, forms a second further fixed cell 231 for connecting a second fixed station 250 and a third fixed station 240, wherein the second further fixed cell 231 comprises a second further coverage area 233 and a third further coverage area 243. More specifically, the second further fixed cell 231 comprises a spatial area where electromagnetic waves 333 propagate on a cable or fiber connected to port 236 on the second fixed access network entity 235 between the second fixed station 250 and the second fixed access network entity 235 and between the third fixed station 240 and the second fixed access network entity 235.

The first coverage area 233 of the further fixed cell 231 comprises a first geographical area where the second fixed station 250 receives a signal whose signal strength is sufficiently strong above a threshold, wherein the signal is transmitted by the cable or fiber. The second coverage area 243 of the further fixed cell 231 comprises a second geographical area where the third fixed station 240 receives a signal whose signal strength is sufficiently strong above a threshold, wherein the signal is transmitted by the cable or fiber.

Furthermore, a location ID 201 instantiated as second fixed location ID 232 has previously been assigned to the second further coverage area 233 and to the third further coverage area 243 in a third trusted association 293 and in a fourth trusted association 295 preceding a third trusted fixed line installation time assignment 393 and preceding a fourth trusted fixed line installation time assignment 394, where the fixed location ID 232 has been assigned to the port 236 that connects the second further fixed cell 231, and the second fixed location ID 232 is transmitted via an N2 interface 237 between the second fixed access network entity 235 and the core network entity 230, where it is stored in an attachment session context information 383 after trusted location ID over N2 Interface transport 370.

The respective N2 interface mentioned above can be defined by 3GPP as part of the 5G system architecture.

In an embodiment, the core network entity 230 such as an AMF (access and mobility management function) entity is configured to determine a trusted location ID of a station 204 instantiated as mobile station 210 based on the mobile location ID 212, a further trusted location ID of a station 204 instantiated as the first fixed station 220 based on the fixed location ID 222, wherein a location ID 201 instantiated as mobile location ID 212 and a location ID 201 instantiated as fixed location ID 222 are represented based on a common location ID namespace 380. Furthermore, the core network entity 230 can also determine a trusted location ID of a station 204 instantiated as the second fixed station 250 based on a location ID 201 instantiated as the second fixed location ID 232 and a trusted location ID of a station 204 instantiated as the third fixed station 240 based also on the second fixed location ID 232 , wherein the second fixed location ID 232 is also represented based on the common location ID namespace 380 as mentioned above, and where fixed location ID 232 identifies both the locations of the second further coverage area 233 and of the third further coverage area 243.

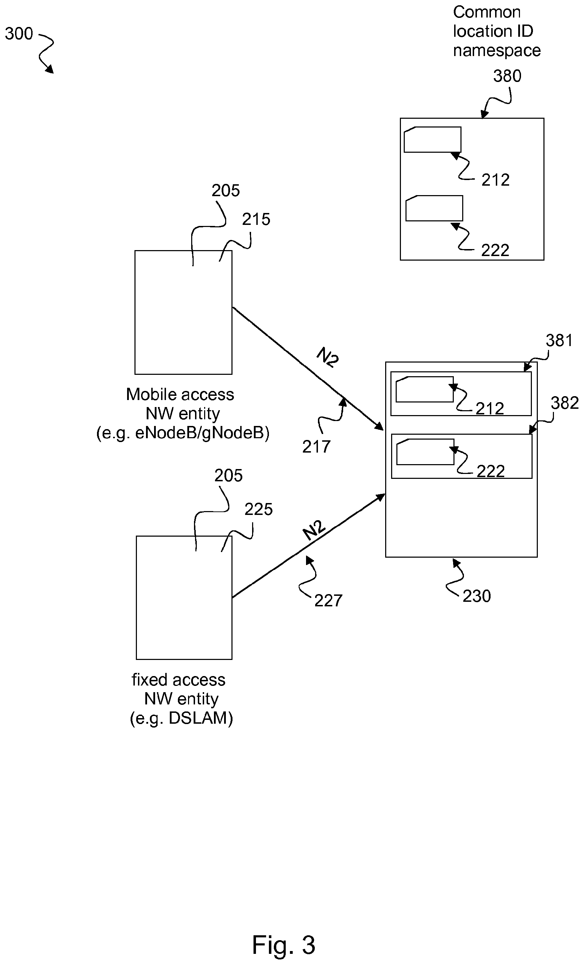

Figure 3: Similar to figure 2, the communication system 300 as shown in figure 3 comprises a plurality of access network entities 205 and a core network entity 230, wherein the plurality of access network entities 205 comprises at least a mobile access network entity 215 and a first fixed access network entity 225.

As already described above, the mobile access network entity 215 can form a mobile cell 211 for connecting a mobile station 210, the mobile cell 211 comprising a coverage area 213, wherein a mobile location ID 212 is assigned to the coverage area 213. The first fixed access network entity 225 can form a first fixed cell 221 for connecting a first fixed station 220, the first fixed cell 221 comprising a first further coverage area 223, wherein a first fixed location ID222 is assigned to the first further coverage area 223, and the mobile location ID 212 has been transmitted at attachment time via an N2 interface 217 from the mobile access network entity 215 to the core network entity 230, where it is stored in an attachment session context information 381, and where the fixed location ID 222 has been transmitted at attachment time via an N2 interface 227 from the fixed access network entity 225 to the core network entity 230, where it is stored in an attachment session context information 382, and where both the mobile location ID 212 and fixed location ID 222 are an element of a mathematical set referred to as common location ID namespace, where the elements of the mathematical set are location IDs which have a common structure.

More details for determining trusted and tamper-proof location identification within a communication cell will be further explained under reference to figure 3 in the following embodiments.

In a further embodiment, the communication system 300 further comprises a network entity 230 and the network entity is configured to store the mobile location ID 212 and the first fixed location ID 222 from the common location ID namespace 380 in a trusted manner in a mobile attachment session context 381 and a fixed attachment session context 382, such that the mobile location ID 212 and the first fixed location ID 222 cannot be tampered.

It is to be noted that the network entity can also be implemented as the mobile access network entity 215 and/or the first fixed access network entity 225. It is worth noting that the respective location ID is determined by the operator network in a trusted manner, that is, an eNodeB, gNodeB or any equivalent access network component can determine the respective location ID, so that each respective location ID is tamper-proof by users, where the trusted manner is based on the location ID being associated with a coverage area in a trusted manner, and subsequently being assigned to the port which originates and or terminates the electromagnetic waves that create the spatial area referred to as cell, which comprises the coverage area identified by the location ID.

Multiple options for a common location ID namespace are described in the following embodiments, including one option to create a subdomain "Ici" of the domain 3gpp.org. The embodiments can delegate to the member operators the right to define identifiers for Ici which are automatically worldwide unique due to the delegation principle. In an embodiment, a fixed mobile converged format can be agreed, such that the following "Ici" belongs to the same convergent namespace under the domain Ici.3gpp.org: a Cell-ID.area-code.mnc.mcc.Ici.3gpp.org, which is full backwards compatible with mobile CGI and extensible as no length restrictions apply; a Line-Code.mnc.mcc.Ici.3gpp.org, which is backwards compatible with fixed Line-ID when translating the mobile network code to the fixed network code as defined in ITU M.1400 and the mobile country code to country code based on ISO 3166 as used in fixed networks supporting the NGA framework (e.g. "DEU" for Germany instead of "262"; or Line-Code.fixed-network-code.fixed-cc.Ici.3gpp.org, which is directly backwards compatible with fixed Line-ID. By way of example, "12345ABXYZ.DTAG.DEU.Ici.3GPP.org as the Line-Id DEU.DTAG.12345ABXYZ" can be derived directly from the name.

The backwards compatibility enables smooth migration of existing fixed broadband lines to an access agnostic 5G core network. This creates a system and method for fixed mobile convergence which allows the migration of existing broadband access lines to a 5G Core Network in a simple way that includes adding an N2 interface to an existing fixed access network connecting it to a 5G AMF (Access and Mobility Management Function) and redirecting the data plane traffic to a 5G UPF (User Plane Function). This migration may be executed not only on an access node by access node basis, but even on a Line-ID by Line-ID basis, i.e. individually per access line and service subscription. This assumes that the fixed network operator's fixed broadband access deployments at the time of migration is supporting the NGA framework.

In an embodiment, a similar namespace as the namespace for Access Point Names (APNs) can be introduced, as subdomain of the 3GPP domain.

In an embodiment, the network entity is configured to assign the mobile location ID 212 from the common location ID namespace 380 by combining a Cell-ID with the domain name and to encode the fixed location ID 222 in the common location ID namespace 380 by combining a further Cell-ID with the domain name, the further Cell-ID being not used for assigning the mobile location ID 212, such as Cell-ID.area-code.mnc.mcc.lci.3gpp.org, which is full backwards compatible with mobile CGI and extensible as no length restrictions apply.

For instance, if the operator does not use Cell-ID (CI) values ending with 7, 8 or 9, then this previously unused portion of the Cl-namespace may be used for the identification of fixed cells.

In an embodiment, the network entity is configured to assign the mobile location ID 212 from the common location ID namespace 380 by combining a Cell-Global-ID (CGI) with the domain name and to assign the fixed location ID 222 from the common location ID namespace 380 by combining a further Cell-Global-ID with the domain name, the further Cell-Global-ID being not used for assigning the mobile location ID 212.

In most, if not all, mobile network deployments, the last digit of the Cell-Global-ID (CGI) has the value 0 when the cell is served by an omnidirectional antenna and a sector number ranging from 1 to 3 when antennas are used that serve a spatial sector that usually is a 120 degree sector. This leaves some portion of the namespace unused, namely the portion of the namespace with CGIs ending with a digit in the range 4 to 9, or at least a portion thereof. A 5G Core Access and Mobility Management Function (AMF) according to an embodiment (or a 4G Mobility Management Entity / MME) shall be able to determine from the Cell-ID present in the attachment procedure that the attachment occurring is a fixed access network attachment procedure via a fixed access line or from a leaf of a fixed access tree.

In an embodiment, the network entity is configured to assign the mobile location ID 212 from the common location ID namespace 380 by combining an Extended-Cell-ID with the domain name and to assign the fixed location ID 222 from the common location ID namespace 380 by combining a further Extended-Cell-ID with the domain name, the further Extended-Cell-ID being not used for assigning the mobile location ID 212, wherein the respective Extended-Cell-ID can be created by extending an existing namespace for 5G network.

In an embodiment, the network entity is configured to map a mobile country code as defined by 3GPP to a fixed country code as defined in ISO 3166, and/or to map a fixed country code as defined in ISO 3166 to a mobile country code as defined by 3GPP, and/or to map a mobile carrier code as defined by 3GPP to a fixed network code as defined by ITU in M.1400, and/or to map fixed network code as defined by ITU in M.1400 to a mobile network code as defined by 3GPP for encoding the mobile location ID and the fixed location ID in the common location ID namespace.

In another embodiment, the core network entity 230 is configured to receive via the N2 interface 217 the mobile location ID 212 together with a mobile station ID assigned to the mobile station 210 in a common location ID namespace format upon a connection request from the mobile station 210, and the core network entity 230 is further configured to receive via the further N2 interface 227 the first fixed location ID 222 together with a first fixed station ID assigned to the first fixed station 220 in the common location ID namespace format upon a connection request from the first fixed station 220.

Therefore, the core network entity 230 is configured to determine the trusted location identification of the mobile station 210 based on the mobile location ID 212 and the mobile station ID and to determine the further trusted location identification of the first fixed station 220 based on the first fixed location ID 222 and the fixed station ID.

In a further embodiment, the core network entity 230 is configured to determine a type of access network, in particular a mobile access network or a fixed access network, on the basis of the trusted location ID upon a connection request from one of the plurality of access network entities, and wherein the core network entity 230 is configured to determine an attachment procedure corresponding to the type of access network.

In a further embodiment, the core network entity 230 is configured to select a SMF (session management function) entity for session management on the basis of the respective trusted location ID , and the SMF entity is configured to determine a session management procedure on the basis of the respective trusted location ID.

In a further embodiment, the communication system 200, 300 further comprises a set of core network slices, each of the set of core network slices comprises a plurality of core network entities, in particular AMF (access and mobility management function) entities. Moreover, each of the plurality of access network entities is configured to determine a core network entity from the plurality of core network entities of a core network slice of the set of core network slices for attachment to the core network slice of the set of core network slices on the basis of the respective location identification of the plurality of access network entities.

In a further embodiment, the communication system 200, 300 further comprises a set of core network slice instances, each of the set of core network slice instances comprises a plurality of core network entities, in particular a multiplicity with a minimum of one AMF (access and mobility management function) entity, where the trusted location ID is used by the minimum of one AMF in a network slice selection procedure.

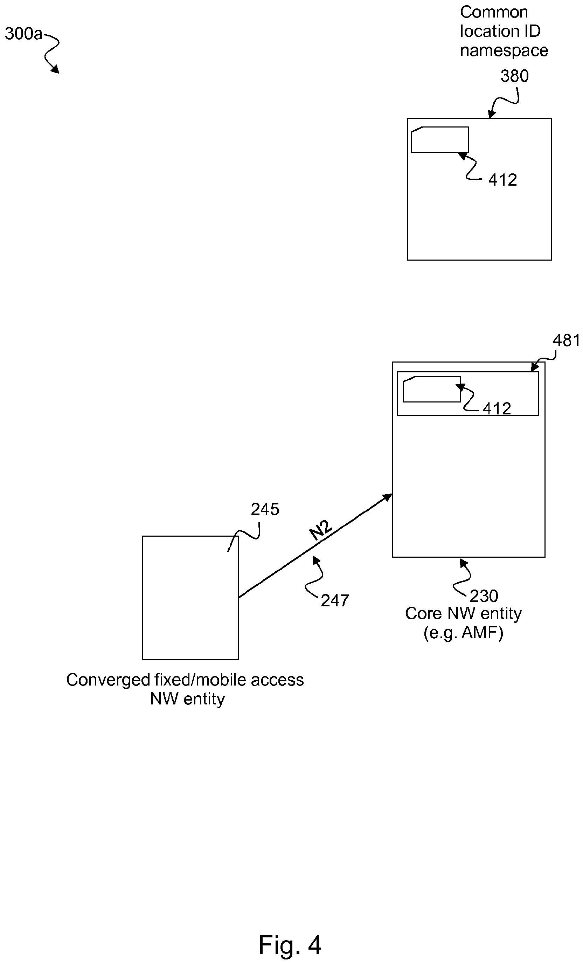

Fig. 4 shows a block diagram of an exemplary communication system comprising a converged fixed/mobile access network entity 245 connected via a fixed/mobile converged unified N2 interface 247 with a core network entity 230, where the core network entity 230 applies either mobile attachment procedures or fixed attachment procedures depending whether the location ID 412 presented by the access network entity 245 and stored by the core network entity 231 in an attachment session context information 481 is a location ID 412 comprised in the common namespace 380 is a fixed Location ID or a mobile Location ID. This means that the core network entity 230 applies either mobile attachment procedures or fixed attachment procedures depending on whether the Location ID 412 is a fixed Location ID or a mobile Location ID, where both types of Location IDs are comprised in the same common namespace 380.

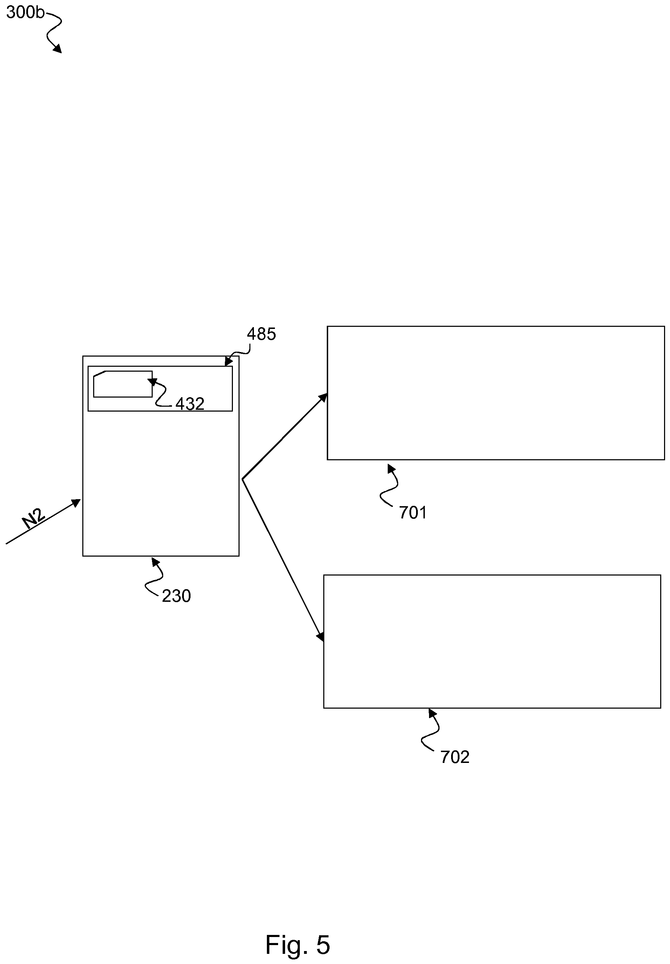

Fig. 5 shows a block diagram of an exemplary communication system comprising a core network entity 230 (in particular an AMF) that selects either a first slice instance 701 or a second slice instance 702 during a slice selection procedure executed during attachment procedures, whereby the selection is dependent on the value of the location identification presented to the core network entity 230, i.e. the AMF over the N2 interface, in particular dependent if the value of the location ID 432 stored in the session attachment context 485 is a mobile location ID or a fixed location ID. This means that a converged network according to the embodiments of the invention comprises both fixed network slices and mobile network slices and the assignment of a station to a fixed or mobile slice can depend solely on the Location ID of the station.

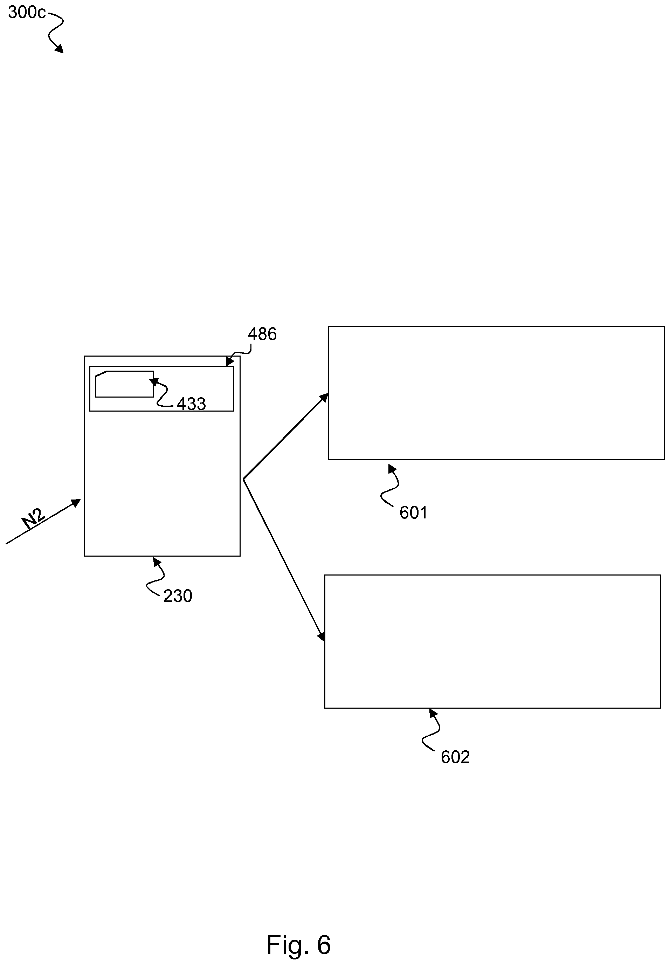

Fig. 6 shows a block diagram of an exemplary communication system comprising a core network entity 230 (in particular an AMF) that selects either a first SMF 601 or a second SMF 602 during attachment procedures, whereby the selection is dependent on the value of the location ID presented to the core network entity 230, i.e. the AMF over the N2 interface, in particular dependent if the value of the location ID 433 stored in the session attachment context 486 is a mobile location ID or a fixed location ID.

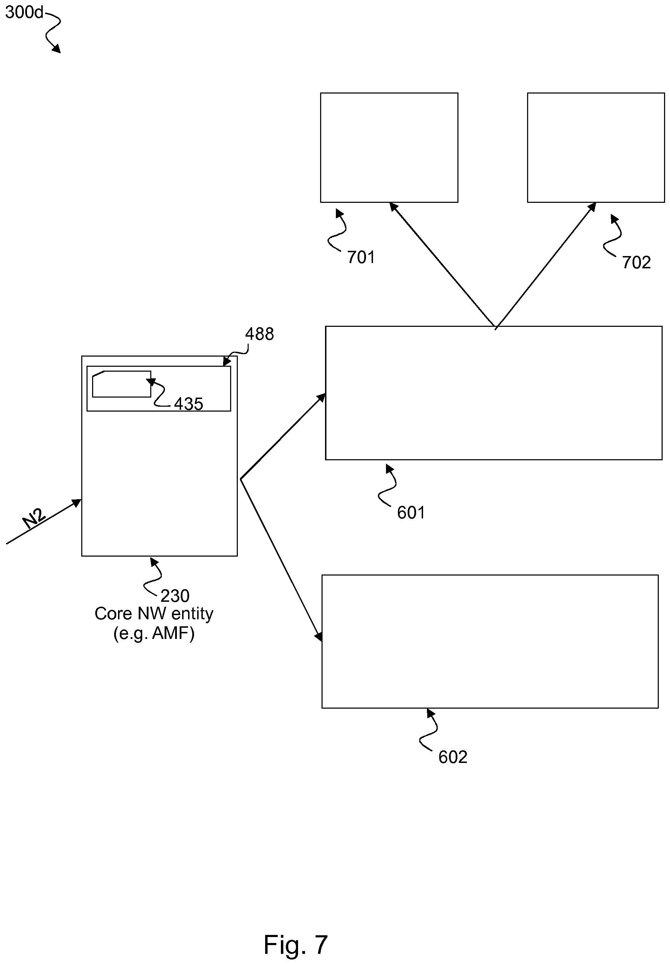

Fig. 7 shows a block diagram of an exemplary communication system comprising the core network entity SMF 601 that selects either a first UPF 701 or a second UPF 702 during attachment procedures, whereby the selection is dependent on the value of the location ID presented over the N2 interface, in particular dependent if the value of the location ID 434 stored in the session attachment context 487 is a mobile location ID or a fixed location ID.

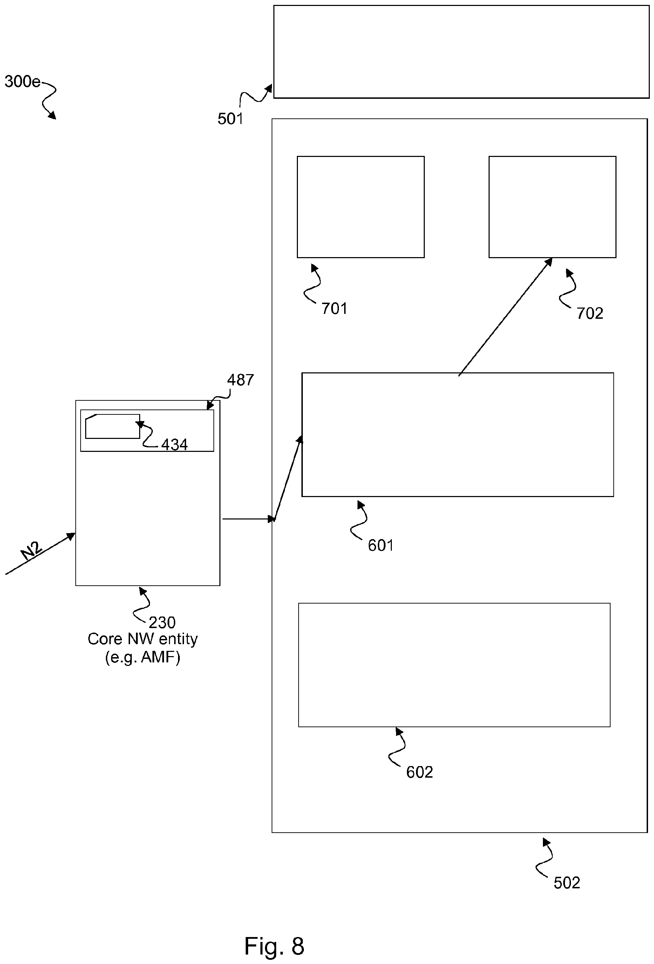

Fig. 8 shows a block diagram of an exemplary communication system comprising a core network entity 230 (in particular an AMF) that selects a second slice instance 502 during a slice selection procedure executed during attachment procedures, whereby the selection of either a first slice instance 501 or second slice instance 502 is dependent on the value of the location ID presented to the AMF over the N2 interface, in particular dependent if the value of the location ID 435 stored in the session attachment context 488 is a mobile location ID or a fixed location ID, and where the core network entity 230 (in particular an AMF) selects a first SMF 601 that is comprised in slice instance 502, and where that second selection may also be dependent on the value of the location ID, and where the SMF 601 selects a second UPF 702, where that third selection may also be dependent on the value of the location information.

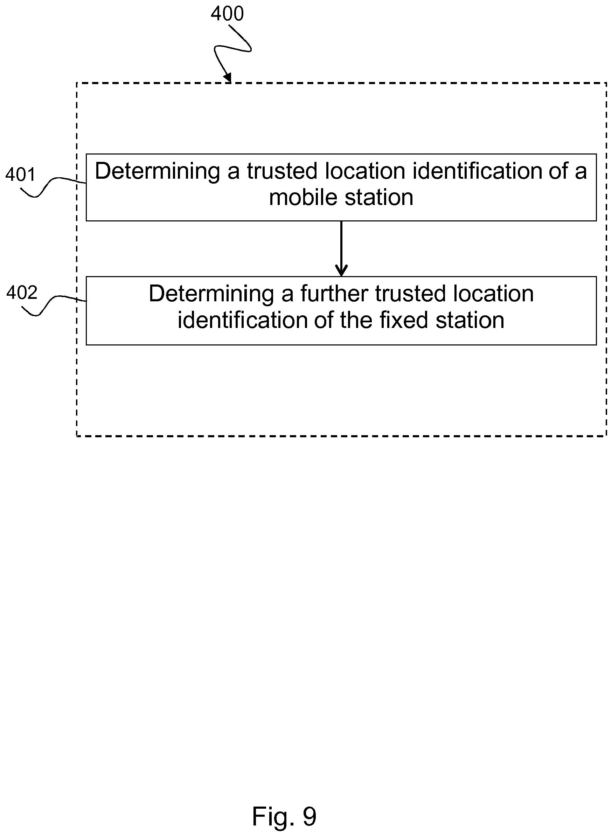

Figure 9 shows a diagram illustrating a corresponding method 400 for operating a communication system 200, 300, wherein the communication system 200, 300 comprises a plurality of access network entities and a core network entity 230, in particular an AMF (access and mobility management function) entity, and wherein the plurality of access network entities comprises: a mobile access network entity 215, in particular an eNodeB or a gNodeB, forming a mobile cell 211 comprising a coverage area 213 for connecting a mobile station 210, wherein a mobile location ID 212is assigned to the mobile cell coverage area 213; and a first fixed access network entity 225 forming a first fixed cell 221 comprising a first further coverage area 223 for connecting a first fixed station 220, wherein a first fixed location ID 222 is assigned to the first further coverage area 223.

The method 400 comprises the following steps: a first step 401 of determining a trusted location identification of the mobile station 210 based on the mobile location ID 212; and a further step 402 of determining a further trusted location identification of the first fixed station 220 based on the first fixed location ID 222, wherein the mobile location ID 212 and the first fixed location ID 222 are represented based on a common location ID namespace 380.

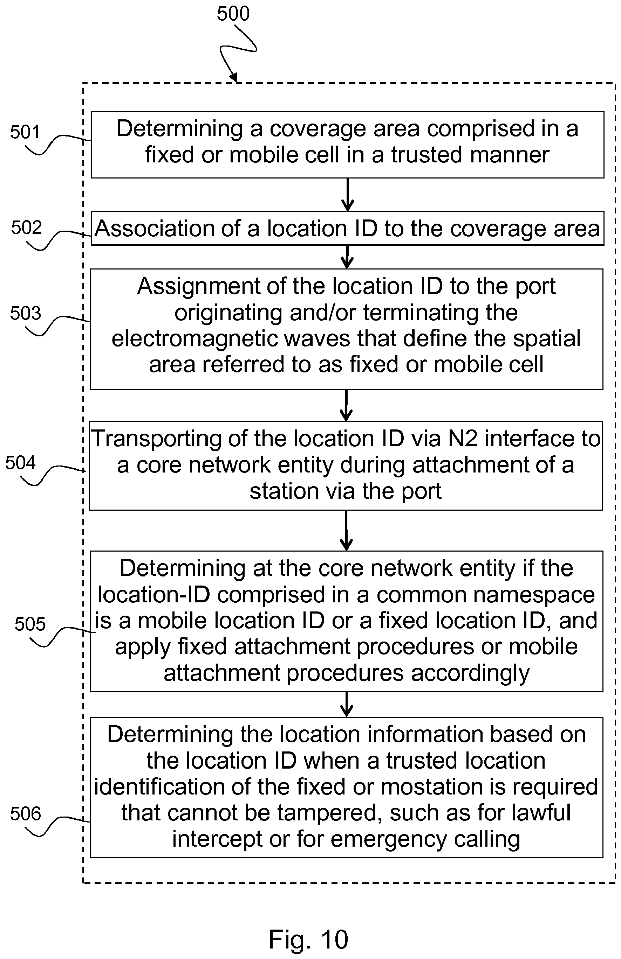

Figure 10 shows a diagram illustrating a corresponding method 500 for operating a communication system 200, 300, wherein the communication system 200, 300 comprises a plurality of access network entities and a core network entity 230, in particular an AMF (access and mobility management function) entity, and wherein the plurality of access network entities comprises: a mobile access network entity 215, in particular an eNodeB or a gNodeB, forming a mobile cell 211 comprising a coverage area 213 for connecting a mobile station 210, wherein a mobile location ID 212is assigned to the mobile cell coverage area 213; and a first fixed access network entity 225 forming a first fixed cell 221 comprising a first further coverage area 223 for connecting a first fixed station 220, wherein a first fixed location ID 222 is assigned to the first further coverage area 223 and/or a converged fixed/mobile access network entity 245 where the location ID 412 is either a fixed location ID or mobile location ID.

The method 500 comprises the following steps:
A first step 501 of determining a coverage area comprised in a fixed or mobile cell in a trusted manner.
A second step 502 of association of a location ID 201 to the coverage area.
A third step 503 of assignment of the location ID 201 to the port originating and/or terminating the electromagnetic waves that define the spatial area referred to as fixed or mobile cell.
A fourth step 504 of transporting the location ID201 via N2 interface to a core network entity during attachment of a station.
A fifth step 505 of determining at the core network entity 230 if the location-ID 201 comprised in a common namespace 380 is a mobile location ID or a fixed location ID, and apply fixed attachment procedures or mobile attachment procedures accordingly.
A sixth step 506 of determining the location identification based on the location ID 201 when a trusted location identification of the fixed or mobile station is required that cannot be tampered, such as for lawful intercept or for emergency calling.

According to an embodiment, a computer program comprising a computer readable program code can perform the method 400 or the method 500 above when executed on a computer or a processor.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A communication system (200, 300), which comprises:
a plurality of access network entities (205) comprising at least:
a mobile access network entity (215), in particular an eNodeB or a gNodeB, forming a mobile cell (211) for connecting a mobile station (210), the mobile cell (211) comprising a coverage area (213), wherein a mobile location identifier (212), ID, is assigned to the coverage area (213), and
a fixed access network entity (225) forming a fixed cell (221) for connecting a fixed station (220), the fixed cell (221) comprising a further coverage area (223), wherein a fixed location ID (222) is assigned to the further coverage area (223);
a core network entity (230), in particular an AMF, access and mobility management function, entity, configured to determine a trusted location identification of the mobile station (210) based on the mobile location ID (212) and a further trusted location identification of the fixed station (220) based on the fixed location ID (222), wherein the mobile location ID (212) and the fixed location ID (222) are instances of a location ID (201) and are represented based on a common location ID namespace (380),
**characterized in that**:
the core network entity (230) is configured to receive, via an N2 interface (217) between the mobile access network entity (215) and the core network entity (230), the mobile location ID (212) together with a mobile station ID assigned to the mobile station (210) in a common location ID namespace format upon a connection request from the mobile station (210), and
the core network entity (230) is configured to receive, via a further N2 interface (227) between the fixed access network entity (225) and the core network entity (230),
the fixed location ID (222) together with a fixed station ID assigned to the fixed station (220) in the common location ID namespace format upon a connection request from the fixed station (220).

2. The communication system (200, 300) of claim 1,
Wherein the location ID (201) is transmitted via an N2 interface (217) between an access network entity (205) and the core network entity (230), in particular
wherein the mobile location ID (212) is transmitted via an N2 interface (217) between the mobile access network entity (215) and the core network entity (230);
wherein the fixed location ID (222) is transmitted via a further N2 interface (227) between the fixed access network entity (225) and the core network entity (230); and
wherein the N2 interface (217) and the further N2 interface (227) are defined by 3GPP as part of the 5G system architecture.

3. The communication system (200, 300) of claim 1 or 2,
Wherein a cell (1) is defined as a fixed mobile converged cell that comprises a spatial area where electromagnetic waves propagate to and from a station (204), and wherein a coverage area (203) comprises a geographical area where the station (204) receives a signal whose signal strength is above a threshold, in particular
wherein the mobile cell (211) comprises a spatial area where electromagnetic waves propagate (313) between the mobile station (210) and an antenna (214) of the mobile access network entity (215) and wherein the coverage area (213) of the mobile cell (211) comprises a geographical area where the mobile station (210) receives a signal whose signal strength is above a threshold, wherein the signal is transmitted by the port (216) of the mobile access network entity (215) that is connected to the antenna (214) associated with the mobile cell (211); and
wherein the fixed cell (221) comprises a spatial area where electromagnetic waves (323) propagate on a cable or fiber between the fixed station (220) and the fixed access network entity (225) and wherein the further coverage area (223) of the fixed cell (221) comprises a further geographical area where the fixed station (220) receives a signal whose signal strength is above a threshold, wherein the signal is transmitted by the port (226) of the fixed access network entity (225) that is connected to the cable or fiber associated with the fixed cell (221).

4. The communication system (200, 300) of any one of the preceding claims,
wherein the communication system (200, 300) further comprises a minimum of one instance of an access network entity (205) and wherein the instance of the access network entity (205) is configured to assign a location ID (201) from the common location ID namespace (380) in a trusted manner such that the location ID (201) cannot be tampered, in particular
wherein the mobile location ID (212) and the fixed location ID (222) from the common location ID namespace (380) is assigned in a trusted manner such that the mobile location ID (212) and the fixed location ID (222) cannot be tampered, and wherein the access network entity (205) comprises the mobile access network entity (215) and/or the fixed access network entity (225), and wherein an location ID (201) is associated with the coverage area (203) and assigned to the port that is associated with the cell (1), in particular wherein the mobile location ID (212) is associated with the coverage area (213) comprised in the mobile cell (211) and assigned to the port (216) comprised in the fixed access network entity (215), and wherein the fixed location ID (222) is associated with the coverage area (223) comprised in the fixed cell (221) and assigned to the port (226) comprised in the fixed access network entity (225), and where at station attachment time the location ID (201) is transported over the N2 Interface to the core network entity (230) and stored by the core network entity (230) in an attachment session context information, that is used for location identification, in particular where at mobile station 210 attachment time the mobile location ID (212) is transported over the N2 interface to the core network entity (230) and stored by the core network entity (230) in an attachment session context information (381), that is used for trusted location identification, and wherein at fixed station (220) attachment time the fixed location ID (222) is transported over the N2 Interface to the core network entity (230) and stored by the core network entity (230) in an attachment session context information (382), that is used for trusted location identification.

5. The communication system (200, 300) of claim 4,
wherein the network entity is configured to map a mobile country code as defined by 3GPP to a fixed country code as defined in ISO 3166, and/or to map a fixed country code as defined in ISO 3166 to a mobile country code as defined by 3GPP, and/or to map a mobile carrier code as defined by 3GPP to a fixed network code as defined by ITU in M.1400, and/or to map fixed network code as defined by ITU in M.1400 to a mobile network code as defined by 3GPP for encoding the mobile location ID and the fixed location ID in the common location ID namespace (380).

6. The communication system (200, 300) of any one of claims 4-5,
the common location ID namespace (380) comprising a domain name, in particular 3GPP.org;
wherein the network entity is configured to assign the mobile location ID (212) from the common location ID namespace (380) and to encode the fixed location ID (222) from the common location ID namespace (380) by combining a further Cell-ID with the domain name, the further Cell-ID being not used for encoding the mobile location ID (212).

7. The communication system (200, 300) of any one of claims 4-6,
the common location ID namespace (380) comprising a domain name, in particular 3GPP.org;
wherein the network entity is configured to assign the mobile location ID from the common location ID namespace by combining a Cell-Global-ID with the domain name and to encode the fixed location ID in the common location ID namespace by combining a further Cell-Global-ID with the domain name, the further Cell-Global-ID being not used for encoding the mobile location ID.

8. The communication system (200, 300) of any one of claims 4-7,
the common location ID namespace (380) comprising a domain name, in particular 3GPP.org;
wherein the network entity is configured to assign the mobile location ID (212) from the common location ID namespace (380) by combining an Extended-Cell-ID with the domain name and to assign the fixed location ID (222) from the common location ID namespace (380) by combining a further Extended-Cell-ID with the domain name, the further Extended-Cell-ID being not used for assigning the mobile location ID (212), wherein the respective Extended-Cell-ID is created by extending an existing namespace for 5G network.

9. The communication system (200, 300) of claim 8,
wherein the core network entity (230) is configured to determine the trusted location identification ID of the mobile station (210) based on the mobile location ID (212) and the mobile station ID and to determine the further trusted location identification ID of the fixed station (220) based on the fixed location ID (222) and the fixed station ID.

10. The communication system (200, 300) of any one of the preceding claims,
wherein the core network entity (230) is configured to determine a type of access network, in particular a mobile access network or a fixed access network, on the basis of the value of the location identification ID upon a connection request from one of the plurality of access network entities, and wherein the core network entity (230) is configured to determine an attachment procedure corresponding to the type of access network.

11. The communication system (200, 300) of any one of the preceding claims,
wherein the core network entity (230) is configured to select:
a first slice instance (501) or a second slice instance (502) during a slice selection procedure executed during an attachment procedure on the basis of the respective location identification of the plurality of access network entities;
a first Session Management Function, SMF, entity (601) or a second SMF entity (602) for session management during an attachment procedure on the basis of the respective location identification of the plurality of access network entities, wherein the selected SMF entity is configured to determine a session management procedure on the basis of the respective location identification of the plurality of access network entities and wherein the selected SMF entity is configured to select a first User Plane Function, UPF, (701) or a second UPF (702) during an attachment procedure on the basis of the respective location identification of the plurality of access network entities.

12. The communication system of any one of the preceding claims,
wherein the communication system (200, 300) further comprises a set of core network slices, each of the set of core network slices comprises a plurality of core network entities, in particular AMF, access and mobility management function, entities; and
wherein each of the plurality of access network entities is configured to determine a core network entity from the plurality of core network entities of a core network slice of the set of core network slices for attachment to the core network slice of the set of core network slices on the basis of the respective location identification of the plurality of access network entities.

13. A method (400) for operating a communication system (200, 300), the communication system (200, 300) comprising a plurality of access network entities (205) and a core network entity (230), in particular an AMF, Access and Mobility Management Function, entity, the plurality of access network entities comprising: a mobile access network entity (215), in particular an eNodeB or a gNodeB, forming a mobile cell (211) comprising a coverage area (213) for connecting a mobile station (210), wherein a mobile location identifier (212), ID, is assigned to the coverage area (213); and a fixed access network entity (225) forming a fixed cell (221) comprising a further coverage area (223) for connecting a fixed station (220), wherein a fixed location ID (222) is assigned to the further coverage area (223), the method (400) comprising:
determining (401) a trusted location identification of the mobile station (210) based on the mobile location ID (212) at the core network entity (230); and
determining (402) a further trusted location identification of the fixed station (220) based on the fixed location ID (222) at the core network entity (230),
wherein the mobile location ID (212) and the fixed location ID (222) are represented based on a common location ID namespace (380),
**characterized in that**:
the core network entity (230) receives, via an N2 interface (217) between the mobile access network entity (215) and the core network entity (230), the mobile location ID (212) together with a mobile station ID assigned to the mobile station (210) in a common location ID namespace format upon a connection request from the mobile station (210), and
the core network entity (230) receives, via a further N2 interface (227) between the fixed access network entity (225) and the core network entity (230), the fixed location ID (222) together with a fixed station ID assigned to the fixed station (220) in the common location ID namespace format upon a connection request from the fixed station (220).

14. The method (400) according to claim 14, further comprising:
determining (501) a coverage area comprised in a fixed or mobile cell in a trusted manner;
associating (502) a location ID (201) to the coverage area;
assigning (503) the location ID (201) to the port originating and/or terminating the electromagnetic waves that define the spatial area referred to as fixed or mobile cell;
transporting (504) the location ID (201) via N2 interface to a core network entity during attachment of a station;
determining (505) at the core network entity (230) if the location-ID (201) comprised in a common namespace (380) is a mobile location ID or a fixed location ID, and apply fixed attachment procedures or mobile attachment procedures accordingly; and
determining (506) the location identification based on the location ID (201) when a trusted location identification of the fixed or mobile station is required that cannot be tampered, such as for lawful intercept or for emergency calling.

## Patentansprüche

1. Kommunikationssystem (200, 300), das aufweist:
mehrere Zugangsnetzwerkentitäten (205), die mindestens aufweisen:
eine Mobilzugangsnetzwerkentität (215), insbesondere einen eNodeB oder einen gNodeB, die eine Mobilzelle (211) zum Verbinden einer Mobilstation (210) bildet,
wobei die Mobilzelle (211) einen Versorgungsbereich (213) aufweist, wobei dem Versorgungsbereich (213) eine Mobilortskennung (212), ID, zugewiesen ist, und
eine Festzugangsnetzwerkentität (225), die eine Festzelle (221) zum Verbinden einer Feststation (220) bildet, wobei die Festzelle (221) einen weiteren Versorgungsbereich (223) aufweist, wobei dem weiteren Versorgungsbereich (223)
eine Festorts-ID (222) zugewiesen ist;
eine Kernnetzwerkentität (230), insbesondere eine Zugangs- und Mobilitätsverwaltungsfunktions-, AMF, Entität, die konfiguriert ist, eine vertrauenswürdige Ortsidentifikation der Mobilstation (210) beruhend auf der Mobilorts-ID (212) und eine weitere vertrauenswürdige Ortsidentifikation der Feststation (220) beruhend auf der Festorts-ID (222) zu bestimmen, wobei die Mobilorts-ID (212) und die Festorts-ID (222) Instanzen einer Orts-ID (201) sind und beruhend auf einem gemeinsamen Orts-ID-Namensraum (380) repräsentiert werden, **dadurch gekennzeichnet, dass**:
die Kernnetzwerkentität (230) konfiguriert ist, bei einer Verbindungsanforderung von der Mobilstation (210) über eine N2-Schnittstelle (217) zwischen der Mobilzugangsnetzwerkentität (215) und der Kernnetzwerkentität (230), die Mobilorts-ID (212) zusammen mit einer der Mobilstation (210) zugewiesenen Mobilstations-ID in einem gemeinsamen Orts-ID-Namensraumformat zu empfangen, und
die Kernnetzwerkentität (230) konfiguriert ist, bei einer Verbindungsanforderung von der Feststation (220) über eine weitere N2-Schnittstelle (227) zwischen der Festzugangsnetzwerkentität (225) und der Kernnetzwerkentität (230), die Festorts-ID (222) zusammen mit einer der Feststation (220) zugewiesenen Feststations-ID im gemeinsamen Orts-ID-Namensraumformat zu empfangen.

2. Kommunikationssystem (200, 300) nach Anspruch 1,
wobei die Orts-ID (201) über eine N2-Schnittstelle (217) zwischen einer Zugangsnetzwerkentität (205) und der Kernnetzwerkentität (230) übertragen wird, wobei insbesondere
die Mobilorts-ID (212) über eine N2-Schnittstelle (217) zwischen der Mobilzugangsnetzwerkentität (215) und der Kernnetzwerkentität (230) übertragen wird;
die Festorts-ID (222) über eine weitere N2-Schnittstelle (227) zwischen der Festzugangsnetzwerkentität (225) und der Kernnetzwerkentität (230) übertragen wird; und
die N2-Schnittstelle (217) und die weitere N2-Schnittstelle (227) durch 3GPP als Teil der 5G-Systemarchitektur definiert sind.

3. Kommunikationssystem (200, 300) nach Anspruch 1 oder 2,
wobei eine Zelle (1) als eine Fest-Mobil-Sammelzelle definiert ist, die einen räumlichen Bereich aufweist, wo sich elektromagnetische Wellen zu und von einer Station (204) ausbreiten, und wobei ein Versorgungsbereich (203) einen geografischen Bereich aufweist, wo die Station (204) ein Signal empfängt, dessen Signalstärke über einem Schwellenwert liegt, insbesondere
wobei die Mobilzelle (211) einen räumlichen Bereich aufweist, wo sich elektromagnetische Wellen (313) zwischen der Mobilstation (210) und einer Antenne (214) der Mobilzugangsnetzwerkentität (215) ausbreiten, und wobei der Versorgungsbereich (213) der Mobilzelle (211) einen geografischen Bereich aufweist, wo die Mobilstation (210) ein Signal empfängt, dessen Signalstärke über einem Schwellenwert liegt, wobei das Signal durch den Port (216) der Mobilzugangsnetzwerkentität (215) übertragen wird, der mit der Antenne (214) verbunden ist, die mit der Mobilzelle (211) verknüpft ist; und wobei die Festzelle (221) einen räumlichen Bereich aufweist, wo sich elektromagnetische Wellen (323) auf einem Kabel oder einer Faser zwischen der Feststation (220) und der Festzugangsnetzwerkentität (225) ausbreiten, und wobei der weitere Versorgungsbereich (223) der Festzelle (221) einen weiteren geografischen Bereich aufweist, wo die Feststation (220) ein Signal empfängt, dessen Signalstärke über einem Schwellenwert liegt, wobei das Signal durch den Port (226) der Festzugangsnetzwerkentität (225) übertragen wird, der mit dem mit der Festzelle (221) verknüpften Kabel oder der Faser verbunden ist.

4. Kommunikationssystem (200, 300) nach einem der vorhergehenden Ansprüche, wobei das Kommunikationssystem (200, 300) ferner mindestens eine Instanz einer Zugangsnetzwerkentität (205) aufweist und wobei die Instanz der Zugangsnetzwerkentität (205) konfiguriert ist, eine Orts-ID (201) aus dem gemeinsamen Orts-ID-Namensraum (380) in einer vertrauenswürdigen Weise zuzuweisen, so dass die Orts-ID (201) nicht gefälscht werden kann, wobei insbesondere
die Mobilorts-ID (212) und die Festorts-ID (222) aus dem gemeinsamen Orts-ID-Namensraum (380) in einer vertrauenswürdigen Weise zugewiesen werden, so dass die Mobilorts-ID (212) und die Festorts-ID (222) nicht gefälscht werden können, und wobei die Zugangsnetzwerkentität (205) die Mobilzugangsnetzwerkentität (215) und/oder die Festzugangsnetzwerkentität (225) aufweist, und wobei eine Orts-ID (201) mit einem Versorgungsbereich (203) verknüpft ist und dem Port zugewiesen ist, der mit der Zelle (1) verknüpft ist, wobei insbesondere die Mobilorts-ID (212) mit dem Versorgungsbereich (213) verknüpft ist, der in der Mobilzelle (211) enthalten ist, und dem Port (216) zugewiesen ist, der in der Festzugangsnetzwerkentität (215) enthalten ist, und wobei die Festorts-ID (222) mit dem Versorgungsbereich (223) verknüpft ist, der in der Festzelle (221) enthalten ist, und dem Port (226) zugewiesen ist, der in der Festzugangsnetzwerkentität (225) enthalten ist, und wobei zu einem Stationsanschlusszeitpunkt die Orts-ID (201) über die N2-Schnittstelle zur Kernnetzwerkentität (230) transportiert wird und durch die Kernnetzwerkentität (230) in Anschlusssitzungs-Kontextinformationen gespeichert wird, die zur Ortsidentifikation verwendet werden, wobei insbesondere zu einem Anschlusszeitpunkt der Mobilstation (210) die Mobilorts-ID (212) über die N2-Schnittstelle zur Kernnetzwerkentität (230) transportiert wird und durch die Kernnetzwerkentität (230) in Anschlusssitzungs-Kontextinformationen (381) gespeichert wird, die zur vertrauenswürdigen Ortsidentifikation verwendet werden, und wobei zum Anschlusszeitpunkt der Feststation (220) die Festorts-ID (222) über die N2-Schnittstelle zur Kernnetzwerkentität (230) transportiert wird und durch die Kernnetzwerkentität (230) in Anschlusssitzungs-Kontextinformationen (382) gespeichert wird, die zur vertrauenswürdigen Ortsidentifikation verwendet werden.

5. Kommunikationssystem (200, 300) nach Anspruch 4,
wobei die Netzwerkentität konfiguriert ist, zum Codieren der Mobilorts-ID und der Festorts-ID im gemeinsamen Orts-ID-Namensraum (380) einen Mobilländercode, wie durch 3GPP definiert, einem Festländercode zuzuordnen, wie in ISO 3166 definiert, und/oder einen Festländercode, wie in ISO 3166 definiert, einem Mobilländercode zuzuordnen, wie durch 3GPP definiert, und/oder einen Mobilträgercode, wie durch 3GPP definiert, einem Festnetzwerkcode zuzuordnen, wie durch ITU in M.1400 definiert, und/oder einen Festnetzwerkcode, wie durch ITU in M.1400 definiert, einem Mobilnetzwerkcode zuzuordnen, wie durch 3GPP definiert.

6. Kommunikationssystem (200, 300) nach einem der Ansprüche 4 bis 5,
wobei der gemeinsame Orts-ID-Namensraum (380) eine Domänennamen, insbesondere 3GPP.org aufweist;
wobei die Netzwerkentität konfiguriert ist, die Mobilorts-ID (212) aus dem gemeinsamen Orts-ID-Namensraum (380) zuzuweisen und die Festorts-ID (222) aus dem gemeinsamen Orts-ID-Namensraum (380) durch Kombinieren einer weitere Zellen-ID mit dem Domänennamen zu codieren, wobei die weitere Zellen-ID nicht zum Codieren der Mobilorts-ID (212) verwendet wird.

7. Kommunikationssystem (200, 300) nach einem der Ansprüche 4 bis 6,
wobei der gemeinsame Orts-ID-Namensraum (380) einen Domänennamen, insbesondere 3GPP.org aufweist;
wobei die Netzwerkentität konfiguriert ist, die Mobilorts-ID aus dem gemeinsamen Orts-ID-Namensraum durch Kombinieren einer Zellen-Global-ID mit dem Domänennamen zuzuweisen und die Festorts-ID im gemeinsamen Orts-ID-Namensraum durch Kombinieren einer weiteren Zelle-Global-ID mit dem Domänennamen zu codieren, wobei die weitere Zellen-Global-ID nicht zum Codieren der Mobilorts-ID verwendet wird.

8. Kommunikationssystem (200, 300) nach einem der Ansprüche 4 bis 7,
wobei der gemeinsame Orts-ID-Namensraum (380) eine Domänennamen, insbesondere 3GPP.org aufweist;
wobei die Netzwerkentität konfiguriert ist, die Mobilorts-ID (212) aus dem gemeinsamen Orts-ID-Namensraum (380) durch Kombinieren einer erweiterten Zellen-ID mit dem Domänennamen zuzuweisen und die Festorts-ID (222) aus dem gemeinsamen Orts-ID-Namensraum (380) durch Kombinieren einer weiteren erweiterten Zellen-ID mit dem Domänennamen zuzuweisen, wobei die weitere erweiterte Zellen-ID nicht zum Zuweisen der Mobilorts-ID (212) verwendet wird, wobei die jeweilige erweiterte Zellen-ID durch Erweitern eines vorhandenen Namensraums für ein 5G-Netzwerk erzeugt wird.

9. Kommunikationssystem (200, 300) nach Anspruch 8,
wobei die Kernnetzwerkentität (230) konfiguriert ist, die vertrauenswürdige Ortsidentifikations-ID der Mobilstation (210) beruhend auf der Mobilorts-ID (212) und der Mobilstations-ID zu bestimmen und die weitere vertrauenswürdige Ortsidentifikations-ID der Feststation (220) beruhend auf der Festorts-ID (222) und der Feststations-ID zu bestimmen.

10. Kommunikationssystem (200, 300) nach einem der vorhergehenden Ansprüche, wobei die Kernnetzwerkentität (230) konfiguriert ist, bei einer Verbindungsanforderung von einer der mehreren Zugangsnetzwerkentitäten einen Typ des Zugangsnetzwerks, insbesondere ein Mobilzugangsnetzwerk oder ein Festzugangsnetzwerk, auf der Grundlage des Werts der Ortsidentifikations-ID zu bestimmen, und wobei die Kernnetzwerkentität (230) konfiguriert ist, eine Anschlussprozedur zu bestimmen, die dem Typ des Zugangsnetzwerks entspricht.

11. Kommunikationssystem (200, 300) nach einem der vorhergehenden Ansprüche, wobei die Kernnetzwerkentität (230) konfiguriert ist, auszuwählen:
eine erste Slice-Instanz (501) oder eine zweite Slice-Instanz (502) während einer Slice-Auswahlprozedur, die während einer Anschlussprozedur ausgeführt wird, auf der Grundlage der jeweiligen Ortsidentifikation der mehreren Zugangsnetzwerkentitäten;
eine erste Sitzungsverwaltungsfunktions-, SMF, Entität (601) oder eine zweite SMF-Entität (602) zur Sitzungsverwaltung während einer Anschlussprozedur auf der Grundlage der jeweiligen Ortsidentifikation der mehreren Zugangsnetzwerkentitäten, wobei die ausgewählte SMF-Entität konfiguriert ist, eine Sitzungsverwaltungsprozedur auf der Grundlage der jeweiligen Ortsidentifikation der mehreren Zugangsnetzwerkentitäten zu bestimmen, und wobei die ausgewählte SMF-Entität konfiguriert ist, eine erste Benutzerebenenfunktion, UPF, (701) oder eine zweite UPF (702) während einer Anschlussprozedur auf der Grundlage der jeweiligen Ortsidentifikation der mehreren Zugangsnetzwerkentitäten auszuwählen.

12. Kommunikationssystem nach einem der vorhergehenden Ansprüche,
wobei das Kommunikationssystem (200, 300) ferner einen Satz von Kernnetzwerk-Slices aufweist, jeder des Satzes der Kernnetzwerk-Slices mehrere Kernnetzwerkentitäten, insbesondere AMF, Zugangs- und Mobilitätsverwaltungsfunktions-, Entitäten aufweist; und
wobei jede der mehreren Zugangsnetzwerkentitäten konfiguriert ist, eine Kernnetzwerkentität aus den mehreren Kernnetzwerkentitäten eines Kernnetzwerk-Slice des Satzes der Kernnetzwerk-Slices zum Anschluss an den Kernnetzwerk-Slice des Satzes der Kernnetzwerk-Slices auf der Grundlage der jeweiligen Ortsidentifikation der mehreren Zugangsnetzwerkentitäten zu bestimmen.

13. Verfahren (400) zum Betreiben eines Kommunikationssystems (200, 300), wobei das Kommunikationssystem (200, 300) mehrere Zugangsnetzwerkentitäten (205) und eine Kernnetzwerkentität (230), insbesondere eine AMF, Zugangs- und Mobilitätsverwaltungsfunktions-, Entität aufweist, wobei die mehreren Zugangsnetzwerkentitäten aufweisen: eine Mobilzugangsnetzwerkentität (215), insbesondere einen eNodeB oder einen gNodeB, die eine Mobilzelle (211), die einen Versorgungsbereich (213) aufweist, zum Verbinden einer Mobilstation (210) bilden, wobei eine Mobilortskennung, ID, (212) dem Versorgungsbereich (213) zugewiesen ist; und eine Festzugangsnetzwerkentität (225), die eine Festzelle (221), die einen weiteren Versorgungsbereich (223) aufweist, zum Verbinden einer Feststation (220) bildet, wobei eine Festorts-ID (222) dem weiteren Versorgungsbereich (223) zugewiesen ist, wobei das Verfahren (400) aufweist:
Bestimmen (401) einer vertrauenswürdigen Ortsidentifikation der Mobilstation (210) beruhend auf der Mobilorts-ID (212) an der Kernnetzwerkentität (230); und
Bestimmen (402) einer weiteren vertrauenswürdigen Ortsidentifikation der Feststation (220) beruhend auf der Festorts-ID (222) an der Kernnetzwerkentität (230),
wobei die Mobilorts-ID (212) und die Festorts-ID (222) beruhend auf einer gemeinsamen Orts-ID-Namensraum (380) repräsentiert werden, **dadurch gekennzeichnet, dass**:
die Kernnetzwerkentität (230) bei einer Verbindungsanforderung von der Mobilstation (210) über eine N2-Schnittstelle (217) zwischen der Mobilzugangsnetzwerkentität (215) und der Kernnetzwerkentität (230) die Mobilorts-ID (212) zusammen mit einer der Mobilstation (210) zugewiesenen Mobilstations-ID in einem gemeinsamen Orts-ID-Namensraumformat empfängt, und
die Kernnetzwerkentität (230) bei einer Verbindungsanforderung von der Feststation (220) über eine weitere N2-Schnittstelle (227) zwischen der Festzugangsnetzwerkentität (225) und der Kernnetzwerkentität (230) die Festorts-ID (222) zusammen mit einer der Feststation (220) zugewiesenen Feststations-ID im gemeinsamen Orts-ID-Namensraumformat empfängt.

14. Verfahren (400) nach Anspruch 14, das ferner aufweist:
Bestimmen (501) eines Versorgungsbereichs, der in einer Fest- oder Mobilzelle enthalten ist, in einer vertrauenswürdigen Weise;
Verknüpfen (502) einer Orts-ID (201) mit dem Versorgungsbereich;
Zuweisen (503) der Orts-ID (201) dem Port, der der Ursprung und/oder das Ziel der elektromagnetischen Wellen ist, die den räumlichen Bereich definieren, der als Fest- oder Mobilzelle bezeichnet wird;
Transportieren (504) der Orts-ID (201) über N2-Schnittstelle zu einer Kernnetzwerkentität während des Anschlusses einer Station;
Bestimmen (505) der Ortsinformationen an der Kernnetzwerkentität (230), wenn die in einem gemeinsamen Namensraum (380) enthaltene Orts-ID (201) eine Mobilorts-ID oder eine Festorts-ID ist, und entsprechendes Anwenden von Festanschlussprozeduren oder Mobilanschlussprozeduren; und
Bestimmen (506) der Ortsidentifikation beruhend auf der Orts-ID (201), wenn eine vertrauenswürdige Ortsidentifikation der Fest- oder Mobilstation erforderlich ist, die nicht gefälscht werden kann, wie zum rechtmäßigen Abhören oder für Notrufe.

## Revendications

1. Système de communication (200, 300), comprenant :
une pluralité d'entités de réseau d'accès (205) comprenant au moins :
une entité de réseau d'accès mobile (215), en particulier un eNodeB ou un gNodeB, formant une cellule mobile (211) pour la connexion à une station mobile (210), ladite cellule mobile (211) comprenant une zone de couverture (213), un identifiant, ID, d'emplacement mobile (212) étant affecté à la zone de couverture (213), et
une entité de réseau d'accès fixe (225) formant une cellule fixe (221) pour la connexion à une station fixe (220), ladite cellule fixe (221) comprenant une autre zone de couverture (223), un identifiant, ID, d'emplacement fixe (222) étant affecté à l'autre zone de couverture (223) ;
une entité de réseau fédérateur (230), en particulier une entité à fonction de gestion d'accès et de mobilité AMF, prévue pour déterminer une identification d'emplacement fiable de la station mobile (210) sur la base de l'ID d'emplacement mobile (212) et d'une autre identification d'emplacement fiable de la station fixe (220) sur la base de l'ID d'emplacement fixe (222), l'ID d'emplacement mobile (212) et l'ID d'emplacement fixe (222) étant des instances d'un ID d'emplacement (201) et étant représentés sur la base d'un nom d'espace d'ID d'emplacement commun (380),
**caractérisé en ce que** :
l'entité de réseau fédérateur (230) est prévue pour recevoir, via une interface N2 (217) entre l'entité de réseau d'accès mobile (215) et l'entité de réseau fédérateur (230), l'ID d'emplacement mobile (212) avec un ID de station mobile affecté à la station mobile (210) dans un format de nom d'espace d'ID d'emplacement commun, par demande de connexion provenant de la station mobile (210), et
l'entité de réseau fédérateur (230) est prévue pour recevoir, via une autre interface N2 (227) entre l'entité de réseau d'accès fixe (225) et l'entité de réseau fédérateur (230), l'ID d'emplacement fixe (222) avec un ID de station fixe affecté à la station fixe (220) dans le format de nom d'espace d'ID d'emplacement commun, par demande de connexion provenant de la station fixe (220).

2. Système de communication (200, 300) selon la revendication 1,
où l'ID d'emplacement (201) est transmis via une interface N2 (217) entre une entité de réseau d'accès (205) et l'entité de réseau fédérateur (230), en particulier où l'ID d'emplacement mobile (212) est transmis via une interface N2 (217) entre l'entité de réseau d'accès mobile (215) et l'entité de réseau fédérateur (230) ;
où l'ID d'emplacement fixe (222) est transmis via une autre interface N2 (227) entre l'entité de réseau d'accès fixe (225) et l'entité de réseau fédérateur (230) ; et
où l'interface N2 (217) et l'autre interface N2 (227) sont définies par 3GPP comme faisant partie de l'architecture du système 5G.

3. Système de communication (200, 300) selon la revendication 1 ou la revendication 2, où une cellule (1) est définie comme cellule convergente fixe-mobile comprenant une zone spatiale où des ondes électromagnétiques se propagent depuis et vers une station (204), et où une zone de couverture (203) comprend une zone géographique où la station (204) reçoit un signal dont l'intensité de signal est supérieure à un seuil, en particulier où la cellule mobile (211) comprend une zone spatiale où des ondes électromagnétiques (313) se propagent entre la station mobile (210) et une antenne (214) de l'entité de réseau d'accès mobile (215), et où la zone de couverture (213) de la cellule mobile (211) comprend une zone géographique où la station mobile (210) reçoit un signal dont l'intensité de signal est supérieure à un seuil, le signal étant transmis par le port (216) de l'entité de réseau d'accès mobile (215) relié à l'antenne (214) associée à la cellule mobile (211) ; et où la cellule fixe (221) comprend un zone spatiale où des ondes électromagnétiques (323) se propagent sur un câble ou une fibre entre la station fixe (220) et l'entité de réseau d'accès fixe (225), et où l'autre zone de couverture (223) de la cellule fixe (221) comprend une autre zone géographique où la station fixe (220) reçoit un signal dont l'intensité de signal est supérieure à un seuil, le signal étant transmis par le port (226) de l'entité de réseau d'accès fixe (225) relié au câble ou à la fibre associés à la cellule fixe (221).

4. Système de communication (200, 300) selon l'une des revendications précédentes, où ledit système de communication (200, 300) comprend en outre un minimum d'une instance d'une entité de réseau d'accès (205) et où l'instance de l'entité de réseau d'accès (205) est prévue pour affecter de manière fiable un ID d'emplacement (201) à partir du nom d'espace d'ID d'emplacement commun (380), de manière à empêcher une falsification de l'ID d'emplacement (201), en particulier
où l'ID d'emplacement mobile (212) et l'ID d'emplacement fixe (222) du nom d'espace d'ID d'emplacement commun (380) sont affectés de manière fiable de manière à empêcher une falsification de l'ID d'emplacement mobile (212) et de l'ID d'emplacement fixe (222), et où l'entité de réseau d'accès (205) comprend l'entité de réseau d'accès mobile (215) et/ou l'entité de réseau d'accès fixe (225), et où un ID d'emplacement (201) est associé à la zone de couverture (203) et affecté au port associé à la cellule (1), en particulier où l'ID d'emplacement mobile (212) est associé à la zone de couverture (213) comprise dans la cellule mobile (211) et affecté au port (216) compris dans l'entité de réseau d'accès fixe (215), et où l'ID d'emplacement fixe (222) est associé à la zone de couverture (223) comprise dans la cellule fixe (221) et affecté au port (226) compris dans l'entité de réseau d'accès fixe (225), et où, au moment de rattachement à la station, l'ID d'emplacement (201) est transporté via l'interface N2 vers l'entité de réseau fédérateur (230) et stocké par l'entité de réseau fédérateur (230) dans une information de contexte de session de rattachement, utilisée pour une identification d'emplacement, en particulier où, au moment de rattachement à la station mobile (210), l'ID d'emplacement mobile (212) est transporté via l'interface N2 vers l'entité de réseau fédérateur (230) et stocké par l'entité de réseau fédérateur (230) dans une information de contexte de session de rattachement (381), utilisée pour une identification d'emplacement fiable, et où, au moment de rattachement à la station fixe (220), l'ID d'emplacement fixe (222) est transporté via l'interface N2 vers l'entité de réseau fédérateur (230) et stocké par l'entité de réseau fédérateur (230) dans une information de contexte de session de rattachement (382), utilisée pour une identification d'emplacement fiable.

5. Système de communication (200, 300) selon la revendication 4,
où l'entité de réseau est prévue pour transposer un code de pays mobile tel que défini par 3GPP vers un code de pays fixe tel que défini dans ISO 3166, et/ou pour transposer un code de pays fixe tel que défini dans ISO 3166 vers un code de pays mobile tel que défini par 3GPP, et/ou pour transposer un code d'opérateur mobile tel que défini par 3GPP vers un code de réseau fixe tel que défini par ITU dans M. 1400, et/ou pour transposer un code de réseau fixe tel que défini par ITU dans M.1400 vers un code de réseau mobile tel que défini par 3GPP pour codage de l'ID d'emplacement mobile et de l'ID d'emplacement fixe dans le nom d'espace d'ID d'emplacement commun (380).

6. Système de communication (200, 300) selon la revendication 4 ou la revendication 5, le nom d'espace d'ID d'emplacement commun (380) comprenant un nom de domaine, en particulier 3GPP.org ;
où l'entité de réseau est prévue pour affecter l'ID d'emplacement mobile (212) à partir du nom d'espace d'ID d'emplacement commun (380) et pour coder l'ID d'emplacement fixe (222) à partir du nom d'espace d'ID d'emplacement commun (380) par combinaison d'une autre ID de cellule avec le nom de domaine, l'autre ID de cellule n'étant pas utilisé pour coder l'ID d'emplacement mobile (212).

7. Système de communication (200, 300) selon l'une des revendications 4 à 6,
le nom d'espace d'ID d'emplacement commun (380) comprenant un nom de domaine, en particulier 3GPP.org ;
où l'entité de réseau est prévue pour affecter l'ID d'emplacement mobile à partir du nom d'espace d'ID d'emplacement commun par combinaison d'un ID mondial de cellule avec le nom de domaine et pour coder l'ID d'emplacement fixe dans le nom d'espace d'ID d'emplacement commun par combinaison d'un autre ID mondial de cellule avec le nom de domaine, l'autre ID mondial de cellule n'étant pas utilisé pour coder l'ID d'emplacement mobile.

8. Système de communication (200, 300) selon l'une des revendications 4 à 7,
le nom d'espace d'ID d'emplacement commun (380) comprenant un nom de domaine, en particulier 3GPP.org ;
où l'entité de réseau est prévue pour affecter l'ID d'emplacement mobile (212) à partir du nom d'espace d'ID d'emplacement commun (380) par combinaison d'un ID de cellule étendue avec le nom de domaine et pour affecter l'ID d'emplacement fixe (222) à partir du nom d'espace d'ID d'emplacement commun (380) par combinaison d'un autre ID de cellule étendue avec le nom de domaine, l'autre ID de cellule étendue n'étant pas utilisé pour affecter l'ID d'emplacement mobile (212), chaque ID de cellule étendue étant créé par extension d'un espace de nom existant pour le réseau 5G.

9. Système de communication (200, 300) selon la revendication 8,
où l'entité de réseau fédérateur (230) est prévue pour déterminer l'ID d'identification d'emplacement fiable de la station mobile (210) sur la base de l'ID d'emplacement mobile (212) et de l'ID de station mobile, et pour déterminer l'autre ID d'identification d'emplacement fiable de la station fixe (220) sur la base de l'ID d'emplacement fixe (222) et de l'ID de station fixe.

10. Système de communication (200, 300) selon l'une des revendications précédentes, où l'entité de réseau fédérateur (230) est prévue pour déterminer un type de réseau d'accès, en particulier un réseau d'accès mobile ou un réseau d'accès fixe sur la base de la valeur de l'ID d'identification d'emplacement au moyen d'une demande de connexion provenant d'une entité de la pluralité d'entités de réseau d'accès, et où l'entité de réseau fédérateur (230) est prévue pour déterminer une procédure de rattachement correspondant au type de réseau d'accès.

11. Système de communication (200, 300) selon l'une des revendications précédentes, où l'entité de réseau fédérateur (230) est prévue pour sélectionner :
une première instance de tranche (501) ou une deuxième instance de tranche (502) lors d'une procédure de sélection de tranche exécutée pendant une procédure de rattachement sur la base de l'identification d'emplacement respective de la pluralité d'entités de réseau d'accès ;
une première entité à fonction de gestion de session SMF (601) ou une deuxième entité SMF (602) pour une gestion de session pendant une procédure de rattachement sur la base de l'identification d'emplacement respective de la pluralité d'entités de réseau d'accès,
l'entité SMF sélectionnée étant prévue pour déterminer une procédure de gestion de session sur la base de l'identification d'emplacement respective de la pluralité d'entités de réseau d'accès, et l'entité SMF sélectionnée étant prévue pour sélectionner une première fonction de plan d'utilisateur UPF (701) ou une deuxième fonction UPF (702) pendant une procédure de rattachement sur la base de l'identification d'emplacement respective de la pluralité d'entités de réseau d'accès.

12. Système de communication selon l'une des revendications précédentes,
où ledit système de communication (200, 300) comprend en outre un ensemble de tranches de réseau fédérateur, chaque tranche de l'ensemble de tranches de réseau fédérateur comprenant une pluralité d'entités de réseau fédérateur, en particulier d'entités à fonction de gestion d'accès et de mobilité AMF ; et
où chaque entité de la pluralité d'entités de réseau d'accès est prévue pour déterminer une entité de réseau fédérateur à partir de la pluralité d'entités de réseau fédérateur d'une tranche de réseau fédérateur de l'ensemble de tranches de réseau fédérateur pour rattachement à la tranche de réseau fédérateur de l'ensemble de tranches de réseau fédérateur sur la base de l'identification d'emplacement respective de la pluralité d'entités de réseau d'accès.

13. Procédé (400) de fonctionnement d'un système de communication (200, 300), ledit système de communication (200, 300) comprenant une pluralité d'entités de réseau d'accès (205) et une entité de réseau fédérateur (230), en particulier une entité à fonction de gestion d'accès et de mobilité AMF, la pluralité d'entités de réseau d'accès comprenant : une entité de réseau d'accès mobile (215), en particulier un eNodeB ou un gNodeB, formant une cellule mobile (211) comprenant une zone de couverture (213) pour la connexion à une station mobile (210), un identifiant, ID, d'emplacement mobile (212) étant affecté à la zone de couverture (213) ; et une entité de réseau d'accès fixe (225) formant une cellule fixe (221) comprenant une autre zone de couverture (223) pour la connexion à une station fixe (220), un identifiant, ID, d'emplacement fixe (222) étant affecté à l'autre zone de couverture (223), ledit procédé (400) comprenant :
la détermination (401) d'une identification d'emplacement fiable de la station mobile (210) sur la base de l'ID d'emplacement mobile (212) sur l'entité de réseau fédérateur (230) ; et
la détermination (402) d'une autre identification d'emplacement fiable de la station fixe (220) sur la base de l'ID d'emplacement fixe (222) sur l'entité de réseau fédérateur (230), l'ID d'emplacement mobile (212) et l'ID d'emplacement fixe (222) étant représentés sur la base d'un nom d'espace d'ID d'emplacement commun (380),
**caractérisé en ce que** :
l'entité de réseau fédérateur (230) reçoit, via une interface N2 (217) entre l'entité de réseau d'accès mobile (215) et l'entité de réseau fédérateur (230), l'ID d'emplacement mobile (212) avec un ID de station mobile affecté à la station mobile (210) dans un format de nom d'espace d'ID d'emplacement commun au moyen d'une demande de connexion provenant de la station mobile (210), et
l'entité de réseau fédérateur (230) reçoit, via une autre interface N2 (227) entre l'entité de réseau d'accès fixe (225) et l'entité de réseau fédérateur (230), l'ID d'emplacement fixe (222) avec un ID de station fixe affecté à la station fixe (220) dans le format de nom d'espace d'ID d'emplacement commun au moyen d'une demande de connexion provenant de la station fixe (220).

14. Procédé (400) selon la revendication 14, comprenant en outre :
la détermination (501) d'une zone de couverture comprise dans une cellule fixe ou une cellule mobile, de manière fiable ;
l'association (502) d'un ID d'emplacement (201) à la zone de couverture ;
l'affectation (503) de l'ID d'emplacement (201) au port de provenance et/ou de destination des ondes électromagnétiques définissant la zone spatiale qualifiée de cellule fixe ou de cellule mobile ;
le transport (504) de l'ID d'emplacement (201) via une interface N2 vers une entité de réseau fédérateur lors du rattachement d'une station ;
la détermination (505) sur l'entité de réseau fédérateur (230) si l'ID d'emplacement (201) compris dans un espace de nom commun (380) est un ID d'emplacement mobile ou un ID d'emplacement fixe, et l'application de procédures de rattachement fixe ou de procédures de rattachement mobile en conséquence ; et
la détermination (506) de l'identification d'emplacement sur la base de l'ID d'emplacement (201) si une identification d'emplacement fiable de la station fixe ou de la station mobile est exigée, impossible à falsifier, par exemple pour une interception légale ou pour un appel d'urgence.
